(19) Europäisches Patentamt
European Patent Office
Office européen des brevets

(11) EP 4 431 535 A1

(12) EUROPEAN PATENT APPLICATION
published in accordance with Art. 153(4) EPC

(43) Date of publication:
**18.09.2024 Bulletin 2024/38**

(21) Application number: **22904609.9**

(22) Date of filing: **06.12.2022**

(51) International Patent Classification (IPC):
***C08F 210/16*** *(2006.01)* ***C08F 210/14*** *(2006.01)*
***C08F 4/659*** *(2006.01)* ***C08F 4/6592*** *(2006.01)*
***C08F 4/64*** *(2006.01)*

(52) Cooperative Patent Classification (CPC):
**C08F 4/64; C08F 4/659; C08F 4/6592;
C08F 210/14; C08F 210/16**

(86) International application number:
**PCT/KR2022/019675**

(87) International publication number:
**WO 2023/106779 (15.06.2023 Gazette 2023/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.12.2021 KR 20210173471**

(71) Applicant: **Hanwha Solutions Corporation
Jung-gu
Seoul 04541 (KR)**

(72) Inventors:
- **PARK, Hye Ran
Daejeon 34128 (KR)**
- **JOUNG, Ui Gap
Daejeon 34128 (KR)**
- **SEO, Junho
Daejeon 34128 (KR)**
- **LEE, Munhee
Daejeon 34128 (KR)**
- **KIM, Daegak
Daejeon 34128 (KR)**
- **KIM, Sung Dong
Daejeon 34128 (KR)**
- **LIM, Seongjae
Daejeon 34128 (KR)**
- **KIM, Ahreum
Daejeon 34128 (KR)**
- **PARK, Jeong Hyun
Daejeon 34128 (KR)**

(74) Representative: **Berggren Oy
P.O. Box 16
Eteläinen Rautatiekatu 10A
00101 Helsinki (FI)**

# (54) CATALYST FOR OLEFIN POLYMERIZATION COMPRISING HYBRID CATALYST COMPOSITION AND OLEFINIC POLYMER PREPARED USING SAME

(57) Provided are a catalyst for olefin polymerization including a hybrid catalyst composition and an olefin-based polymer prepared therefrom. The hybrid metallocene catalyst according to an exemplary embodiment of the present invention allows preparation of an olefin polymer having a broad molecular weight distribution and excellent high-speed processability. In addition, an olefin-based polymer prepared in the presence of the catalyst has a broad molecular weight distribution and excellent high-speed processability.

[FIG. 1]

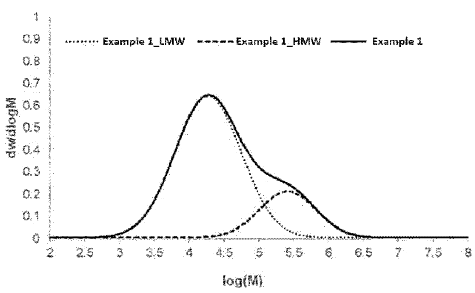


EP 4 431 535 A1

## Description

[Technical Field]

The present invention relates to a catalyst for olefin polymerization including a hybrid catalyst composition, and an olefin-based polymer prepared therefrom. Specifically, the present invention relates to a hybrid metallocene catalyst for olefin polymerization for preparing an olefin-based polymer having a broad molecular weight distribution, and an olefin polymer which is polymerized in the presence of the catalyst, has a broadmolecular weight distribution, and has excellent high-speed processability.

[Background Art]

Polyolefin-based polymers are used in various ways in real life as materials for shopping bags, greenhouses, fishing nets, cigarette wrappers, ramen bags, yogurt bottles, battery cases, car bumpers, interior materials, shoe soles, washing machines, and the like.
Conventionally, polyolefin-based polymers such as polyethylene, polypropylene, and ethylene $\alpha$-olefin copolymers and copolymer thereof are prepared by heterogeneous catalysts such as a Zielger-Natta catalyst formed of a titanium compound and an alkyl aluminum compound.
Recently, a method of preparing polyolefin using a metallocene catalyst which is a homogeneous catalyst having very high catalytic activity has been studied. A metallocene catalyst is a compound in which a ligand such as cyclopentadienyl, indenyl, or cycloheptadienyl is coordinated to a transition metal or a transition metal halogen compound, and has a sandwich structure as a basic form. Herein, it has various molecular structures depending on a ligand form and the type of center metal.
A Ziegler-Natta catalyst which is a heterogeneous catalyst has an active site having heterogeneous properties, since a metal component as the active site is dispersed on an inert solid surface; however, the metallocene catalyst is known as a single-site catalyst having identical polymerization properties in all active sites, since it is one compound having a certain structure.
The metallocene catalyst as such is easily used for copolymerization and may adjust a stereostructure of a polymer depending on catalyst symmetry, and a polymer prepared therefrom has a narrow molecular weight distribution and a uniform comonomer distribution.
However, a polymer prepared by the metallocene catalyst has excellent mechanical strength, but low processability, due to the narrow molecular weight distribution. In order to solve the problem, there are various methods, such as changing a molecular structure of a polymer or broadening a molecular weight distribution. For example, in U.S. Patent No. 5,272,236, processability of a polymer was improved using a catalyst in which a long chain branch (LCB) is introduced as a side branch to a main chain of a polymer, but a supported catalyst had low activity.
In order to solve the problem of the single metallocene catalyst and more conveniently develop a catalyst having excellent activity and improved processability, a method of hybrid-supporting metallocene catalysts (heterogeneous metallocene catalysts) having different properties from each other was suggested. For example, U.S. Patent Nos. 4,935,474, 6,828,394, and 6, 894, 128, Korean Patent No. 1437509, and U.S. Patent No. 6,841,631 disclose a method of preparing polyolefin having a bimodal molecular weight distribution using catalysts having different reactivities to comonomers.
However, polyolefin having a bimodal molecular weight distribution does not necessarily have excellent processability in a high speed area.
Therefore, there is a need for a metallocene catalyst capable of preparing an olefin-based polymer with a broad molecular weight distribution and excellent high-speed processability.

**[Disclosure]**

[Technical Problem]

An object of the present invention is to provide a hybrid metallocene catalyst capable of preparing an olefin-based polymer having a broad molecular weight distribution and excellent high-speed processability.
Another object of the present invention is to provide an olefin-based polymer which is prepared in the presence of the above catalyst, and has a broad molecular weight distribution and excellent high-speed processability.

[Technical Solution]

According to one embodiment of the present invention , a hybrid metallocene catalyst includes: (a) at least one

first transition metal compound selected from a transition metal compound represented by the following Chemical Formula 1 and a transition metal compound represented by the following Chemical Formula 2; (b) at least one second transition metal compound selected from a transition metal compound represented by the following Chemical Formula 3; (c) at least one third transition metal compound selected from a transition metal compound represented by the following Chemical Formula 4, a transition metal compound represented by the following Chemical Formula 5a, and a transition metal compound represented by the following Chemical Formula 5b; and (d) a cocatalyst compound; wherein an olefin-based polymer prepared in the presence of the catalyst has a processability index represented by the following Equation 1 of 0 to 4.5, preferably 0 to 4.0:

[Chemical Formula 1]

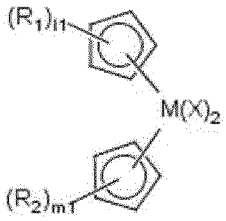

[Chemical Formula 2]

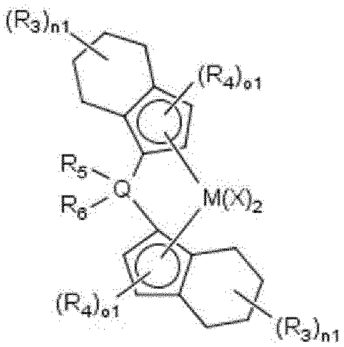

[Chemical Formula 3]

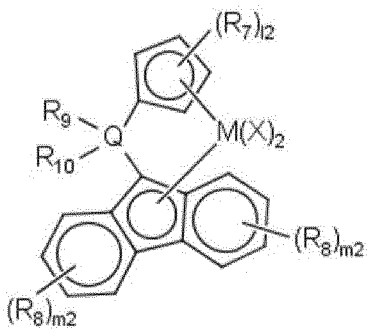

[Chemical Formula 4]

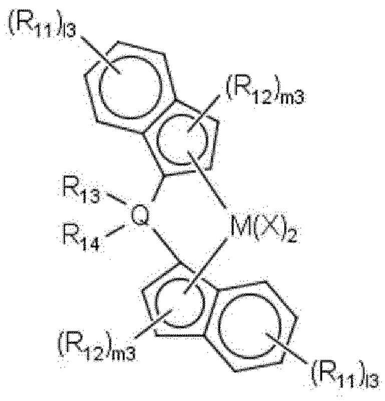

[Chemical Formula 5a]

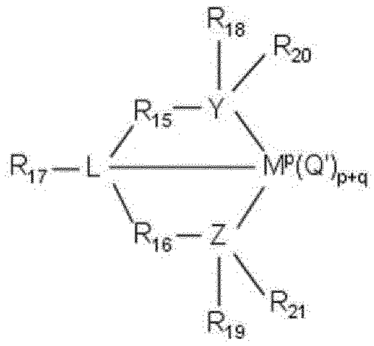

[Chemical Formula 5b]

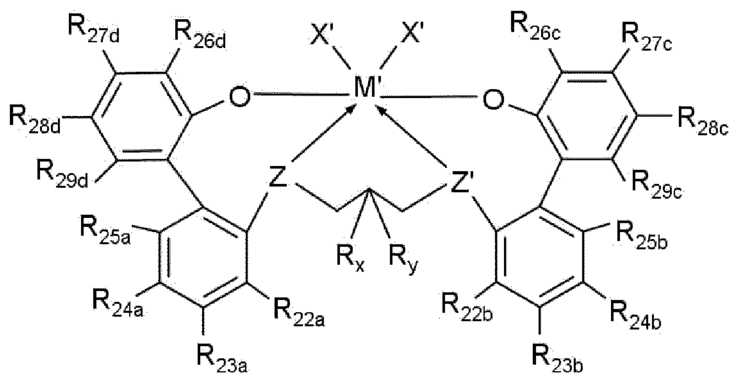

Processability index = [(HMW %) × (HMW Mw) - (LMW %) × (LMW Mw) × (total PDI)/(total Mw) [Equation 1]

wherein l1 and m1 are independently of each other an integer of 0 to 5,
l2, l3, m2, and n1 are independently of one another an integer of 0 to 4;
m3 and o1 are independently of each other an integer of 0 to 2,
p is an oxidation state of M, and is +3, +4, or +5,
q is a formal charge of a YZL ligand, and is 0, -1, - 2, or -3,
M is independently of each other titanium (Ti), zirconium (Zr), or hafnium (Hf),
M' is titanium, zirconium, or hafnium, and is in a formal oxidation state of +2, +3, or +4, respectively,
X is independently of each other a halogen, $C_{1-20}$ alkyl, $C_{2-20}$ alkenyl, $C_{2-20}$ alkynyl, $C_{6-20}$ aryl, $C_{1-20}$ alkyl $C_{6-20}$ aryl, $C_{6-20}$ aryl $C_{1-20}$ alkyl, $C_{1-20}$ alkylamido, or $C_{6-20}$ arylamido,
X' is independently of each other alkyl,

Q is independently of each other carbon (C), silicon (Si), germanium (Ge), or tin (Sn),

Q' is an anionic leaving group and is independently of each other hydrogen, a substituted or unsubstituted $C_{1-40}$ hydrocarbon group, a substituted or unsubstituted $C_{1-40}$ heterohydrocarbon group, a heteroatom, or a halogen,

L is a Group 15 or Group 16 element, and preferably nitrogen,

Y is a Group 15 element, preferably nitrogen or phosphorus, and more preferably nitrogen,

Z is a Group 15 element, preferably nitrogen or phosphorus, and more preferably nitrogen,

Z' is independently of each other -O-, -S-, -N($C_{1-40}$ hydrocarbon group)-, or -P($C_{1-40}$ hydrocarbon group)-,

$R_1$ to $R_4$, $R_7$, $R_8$, $R_{11}$, and $R_{12}$ are independently of one another substituted or unsubstituted $C_{1-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl, substituted or unsubstituted $C_{3-20}$ heteroaryl, substituted or unsubstituted $C_{1-20}$ alkylamido, substituted or unsubstituted $C_{6-20}$ arylamido, or substituted or unsubstituted $C_{1-20}$ silyl, but these may or may not be independently of each other connected to an adjacent group to form a substituted or unsubstituted, saturated or unsaturated $C_{4-20}$ ring,

$R_5$, $R_6$, $R_9$, $R_{10}$, $R_{13}$, and $R_{14}$ are independently of each other substituted or unsubstituted $C_{1-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl, substituted or unsubstituted $C_{3-20}$ heteroaryl, substituted or unsubstituted $C_{1-20}$ alkylamido, substituted or unsubstituted $C_{6-20}$ arylamido, or substituted or unsubstituted $C_{1-20}$ silyl, but $R_5$ and $R_6$, $R_9$ and $R_{10}$, and $R_{13}$ and $R_{14}$ may or may not be independently of one another connected to each other to form a substituted or unsubstituted, saturated or unsaturated $C_{2-20}$ ring,

$R_{15}$ and $R_{16}$ are independently of each other a $C_{1-20}$ hydrocarbon group or a heteroatom-containing group, in which the heteroatom is silicon, germanium, tin, lead, or phosphorus, or $R_{15}$ and $R_{16}$ may be connected to each other,

$R_{17}$ does not exist, or is hydrogen, $C_{1-20}$ alkyl, a halogen, or a heteroatom-containing group,

$R_{18}$ and $R_{19}$ are independently of each other an alkyl group, an aryl group, a substituted aryl group, a cyclic alkyl group, a substituted cyclic alkyl group, or a polycyclic system,

$R_{20}$ and $R_{21}$ independently of each other do not exist, or may be hydrogen, an alkyl group, a halogen, a heteroatom, a hydrocarbon group, or a heteroatom-containing group,

$R_x$ and $R_y$ are independently of each other a substituted or unsubstituted $C_{1-40}$ hydrocarbon group, a substituted or unsubstituted $C_{1-40}$ heterohydrocarbon group, a halogen, or hydrogen,

$R_{22a}$, $R_{23a}$, $R_{24a}$, $R_{25a}$, $R_{22b}$, $R_{23b}$, $R_{24b}$, $R_{25b}$, $R_{26c}$, $R_{27c}$, $R_{28c}$, $R_{29c}$, $R_{26d}$, $R_{27d}$, $R_{28d}$, and $R_{29d}$ are independently of one another a substituted or unsubstituted $C_{1-40}$ hydrocarbon group, a substituted or unsubstituted $C_{1-40}$ heterohydrocarbon group,$-Si(R_e)_3$, $-OSi(R_e)_3$, $-Ge(R_e)_3$, $-P(R_e)_2$, $-N(R_e)_2$, $-OR_e$, $-SR_e$,$-NO_2$, -CN, $-CF_3$, $-OCF_3$, $-S(O)R_e$, $-S(O)_2R_e$, $-N=C(R_e)_2$, $-OC(O)R_e$, $-C(O)OR_e$, $-N(R)C(O)R_e$, $-C(O)N(R_e)_2$, a halogen, and hydrogen, in which $R_e$ is independently of each other a substituted or unsubstituted $C_{1-30}$ hydrocarbon group or a substituted or unsubstituted $C_{1-30}$ heterohydrocarbon group, but two or more of $R_{22a}$, $R_{23a}$, $R_{24a}$, $R_{25a}$, $R_{22b}$, $R_{23b}$, $R_{24b}$, $R_{25b}$, $R_{26c}$, $R_{27c}$, $R_{28c}$, $R_{29c}$, $R_{26d}$, $R_{27d}$, $R_{28d}$, and $R_{29d}$ may or may not form one or more cyclic structures, and

HMW% is area% of a high molecular weight polymer in a polymer, LMW% is area% of a low molecular weight polymer in a polymer, HMW Mw is a weight average molecular weight of a high molecular weight polymer in a polymer and is 50,000 to 600,000 g/mol; LMW Mw is a weight average molecular weight of a low molecular weight polymer in a polymer and is 5,000 to 30,000 g/mol; total PDI is a molecular weight distribution (Mn/Mw) of a polymer; and total Mw is a weight average molecular weight of a polymer, when measured with gel permeation chromatography (GPC).

In a specific example of the present invention, the transition metal compound of Chemical Formula 1 may be at least one of transition metal compounds represented by the following Chemical Formulae 1-1 to 1-8, and the transition metal compound of Chemical Formula 2 may be a transition metal compound represented by the following Chemical Formula 2-1:

[Chemical Formula 1-1]

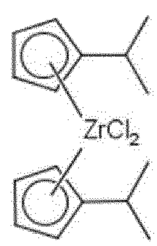

[Chemical Formula 1-2]

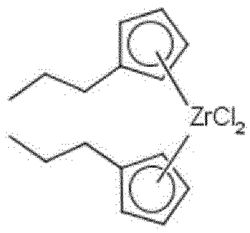

[Chemical Formula 1-3]

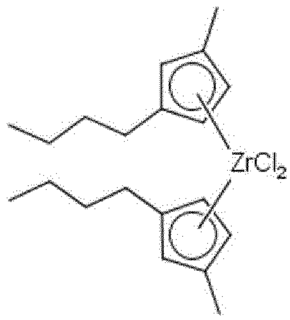

[Chemical Formula 1-4]

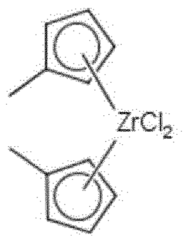

[Chemical Formula 1-5]

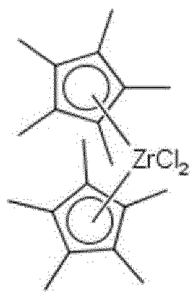

[Chemical Formula 1-6]

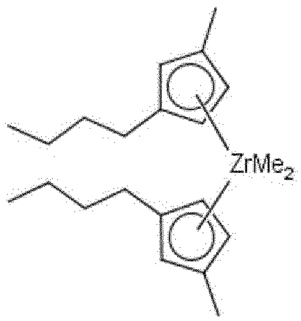

[Chemical Formula 1-7]

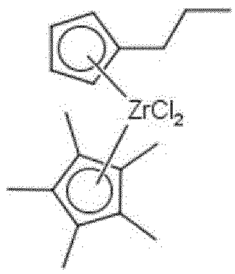

[Chemical Formula 1-8]

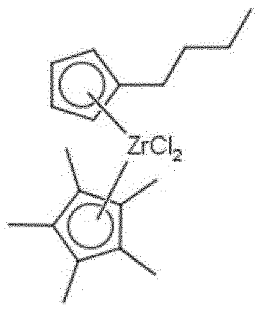

[Chemical Formula 2-1]

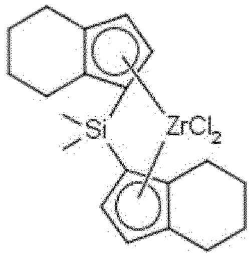

wherein Me is methyl.

In a specific example of the present invention, the transition metal compound of Chemical Formula 3 may be at least one of transition metal compounds represented by the following Chemical Formulae 3-1 to 3-10:

[Chemical Formula 3-1]

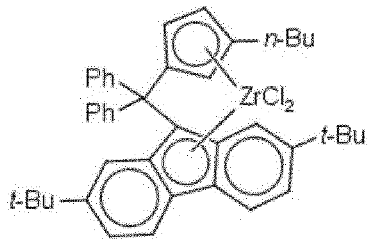

[Chemical Formula 3-2]

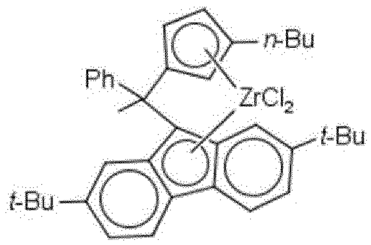

[Chemical Formula 3-3]

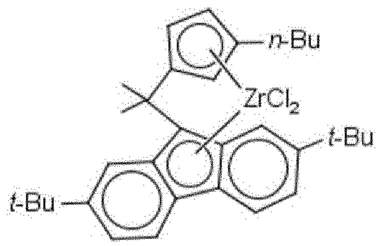

[Chemical Formula 3-4]

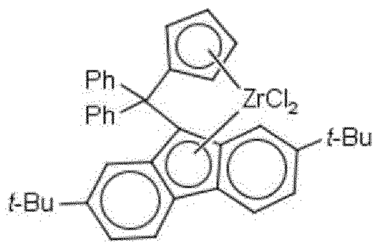

[Chemical Formula 3-5]

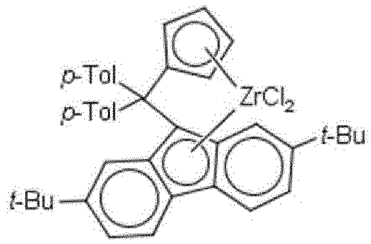

[Chemical Formula 3-6]

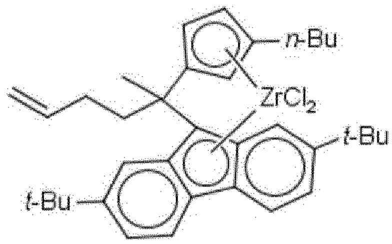

[Chemical Formula 3-7]

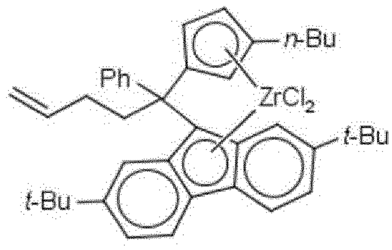

[Chemical Formula 3-8]

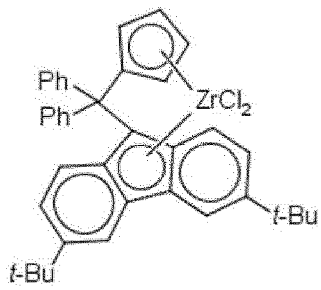

[Chemical Formula 3-9]

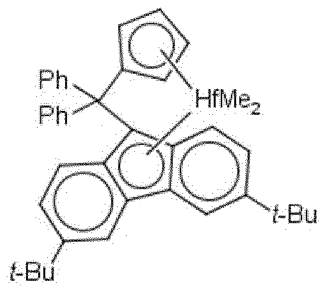

[Chemical Formula 3-10]

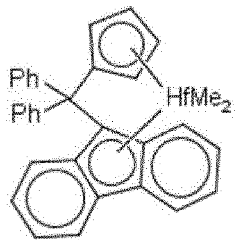

wherein Me is methyl, n-Bu is n-butyl, t-Bu is t-butyl, Ph is phenyl, and p-Tol is p-tolyl.

In a specific example of the present invention, the transition metal compound of Chemical Formula 4 may be at least one of transition metal compounds represented by the following Chemical Formulae 4-1 and 4-2, the transition metal compound of Chemical Formula 5 may be at least one of transition metal compounds represented by the following Chemical Formulae 5-1 to 5-4, and the compound of Chemical Formula 5b may be at least one of transition metal compounds represented by the following Chemical Formulae 5-5 and 5-6:

[Chemical Formula 4-1]

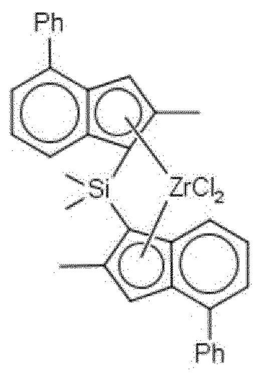

[Chemical Formula 4-2]

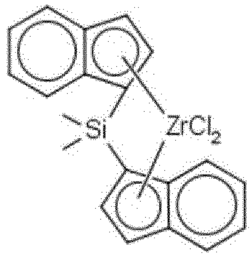

[Chemical Formula 5-1]

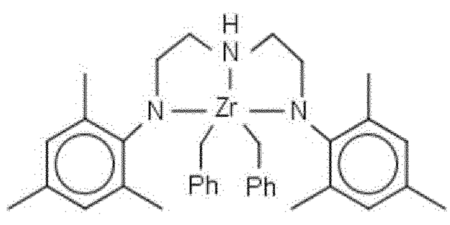

[Chemical Formula 5-2]

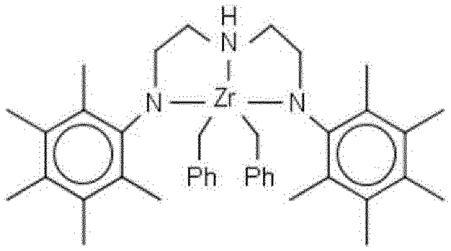

[Chemical Formula 5-3]

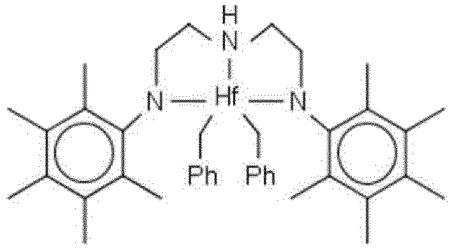

[Chemical Formula 5-4]

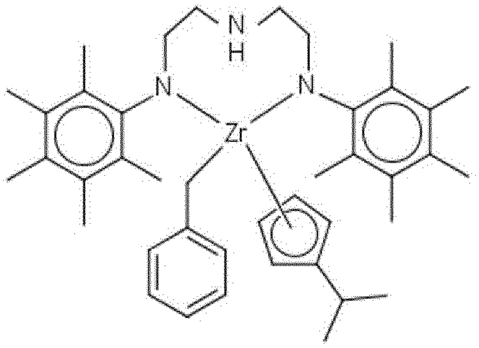

[Chemical Formula 5-5]

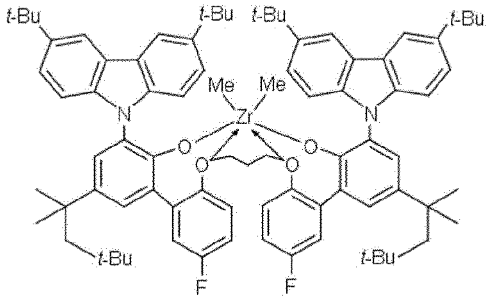

[Chemical Formula 5-6]

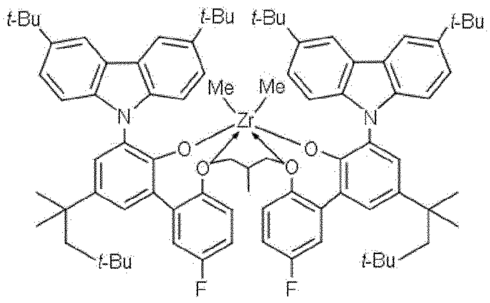

wherein Me is methyl, t-Bu is t-butyl, and Ph is phenyl.

In a specific example of the present invention, the cocatalyst compound may include at least one selected from the group consisting of a compound represented by the following Chemical Formula 6, a compound represented by the following Chemical Formula 7, and a compound represented by Chemical Formula 8:

[Chemical Formula 6]

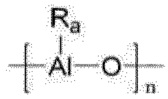

[Chemical Formula 7]

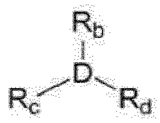

[Chemical Formula 8] $[L-H]^+[Z(A)_4]^-$ or $[L]+[Z(A)_4]^-$

wherein n is an integer of 2 or more, and $R_a$ is a halogen atom, a hydrocarbon group having 1 to 20 carbon atoms, or a hydrocarbon group having 1 to 20 carbon atoms substituted by a halogen,

D is aluminum (Al) or boron (B), and $R_b$, $R_c$, and $R_d$ are independently of one another a halogen atom, a hydrocarbon group having 1 to 20 carbon atoms, a hydrocarbon group having 1 to 20 carbon atoms substituted by a halogen, or an alkoxy group having 1 to 20 carbon atoms, and

L is a neutral or cationic Lewis base, $[L-H]^+$ and $[L]^+$ are a Bronsted acid, Z is a Group 13 element, and A is independently of each other a substituted or unsubstituted aryl group having 6 to 20 carbon atoms or a substituted or unsubstituted alkyl group having 1 to 20 carbon atoms.

In a preferred specific example of the present invention, the compound represented by Chemical Formula 6 may be at least one selected from the group consisting of methylaluminoxane, ethylaluminoxane, isobutylaluminoxane, and butylaluminoxane.

In a preferred specific example of the present invention, the compound represented by Chemical Formula 7 may be at least one selected from the group consisting of trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentylaluminum, trihexylaluminum, trioctylaluminum, ethyldimethylaluminum, methyldiethylaluminum, triphenylaluminum, tri-p-tolylaluminum, dimethylaluminummethoxide, dimethylaluminumethoxide, trimethylboron, triethylboron, triisobutylboron, tripropylboron, and tributylboron.

In a preferred specific example of the present invention, the compound represented by Chemical Formula 8 may be at least one selected from the group consisting of triethylammonium tetraphenylboron, tributylammonium tetraphenylboron, trimethylammonium tetraphenylboron, tripropylammonium tetraphenylboron, trimethylammonium tetra(p-tolyl)boron, trimethylammonium tetra(o,p-dimethylphenyl)boron, tributylammonium tetra(p-trifluoromethylphenyl)boron, trimethylammonium tetra(p-trifluoromethylphenyl)boron, tributylammonium tetrapentafluorophenylboron, N,N-diethylanilinium tetraphenylboron, N,N-diethylanilinium tetrapentafluorophenylboron, diethylammonium tetrapentafluorophenylboron, triphenylphosphonium tetraphenylboron, trimethylphosphonium tetraphenylboron, triethylammonium tetraphenylaluminum, tributylammonium tetraphenylaluminum, trimethylammonium tetraphenylaluminum, tripropylammonium tetraphenylaluminum, trimethylammonium tetra(p-tolyl)aluminum, tripropylammonium tetra(p-tolyl)aluminum, triethylammonium tetra(o,p-dimethylphenyl)aluminum, tributylammonium tetra(p-trifluoromethylphenyl)aluminum, trimethylammonium tetra(p-trifluoromethylphenyl)aluminum, tributylammonium tetrapentafluorophenylaluminum, N,N-diethylanilinium tetraphenylaluminum, N,N-diethylanilinium tetrapentafluorophenylaluminum, diethylammonium tetrapentatetraphenylaluminum, triphenylphosphonium tetraphenylaluminum, trimethylphosphonium tetraphenylaluminum, tripropylammonium tetra(p-tolyl)boron, triethylammonium tetra(o,p-dimethylphenyl)boron, triphenylcarbonium tetra(p-trifluoromethylphenyl)boron, and triphenylcarbonium tetrapentafluorophenylboron.

In a specific example, the hybrid metallocene catalyst for olefin polymerization may further include a carrier which supports the hybrid transition metal compound, the cocatalyst compound, or both.

In a specific example of the present invention, the carrier may include at least one selected from the group consisting of silica, alumina, and magnesia.

Herein, a total amount of the hybrid transition metal compound supported on the carrier may be 0.001 to 1 mmol based on 1 g of the carrier, and a total amount of the cocatalyst compound supported on the carrier may be 2 to 15 mmol based on 1 g of the carrier.

In another general aspect, an olefin-based polymer which is polymerized in the presence of the hybrid metallocene catalyst for olefin polymerization, and has a density of 0.940 to 0.960 g/cm3, a melt index ($I_{2.16}$) measured with a load of 2.16 kg at 190°C of 0.02 to 2.0 g/10 min, a ratio (melt flow ratio; MFR) between a melt index ($I_{21.6}$) measured with a load of 21.6 kg and a melt index ($I_{2.16}$) measured with a load of 2.16 kg at 190°C of 30 to 200, and a processability index represented by the following Equation 1 of 0 to 4.5, preferably 0 to 4.0 is provided:

$$\text{Processability index} = [(\text{HWM }\%) \times (\text{HMW Mw}) - (\text{LMW }\%) \times (\text{LMW Mw})] \times (\text{total PDI})/(\text{total PDI})/(\text{total Mw}) \quad \text{[Equation 1]}$$

wherein HMW%, LMW%, HMW Mw, LMW Mw, total PDI, and total Mw are as defined for the above hybrid metallocene catalyst.

In a specific example of the present invention, in the olefin-based polymer, an area of a low molecular weight polymer having a weight average molecular weight of 5,000 to 30,000 g/mol may be 40 to 85%, and an area of a high molecular weight polymer having a weight average molecular weight of 50,000 to 600,000 g/mol may be 15 to 60%, when measured with GPC.

In a specific example of the present invention, the olefin-based polymer may have a shear rate as defined in the following Equation 2 of 1,750 $sec^{-1}$ or more, preferably 2,0000 $sec^{-1}$ or more, when measured with a capillary rheometer:

[Equation 2]

$$\dot{\gamma}_{ap} = \frac{4V}{\pi R^3}$$

wherein $\dot{\gamma}_{ap}$ is an apparent shear rate ($sec^{-1}$), V is a volume flow ($mm^3/sec$) produced by a piston, and R is a radius (mm) of a round hole capillary.

[Advantageous Effects]

The hybrid metallocene catalyst according to an exemplary embodiment of the present invention allows preparation of an olefin-based polymer having a broad molecular weight distribution and excellent high-speed processability. In addition, an olefin-based polymer prepared in the presence of the catalyst has a broad molecular weight distribution and excellent high-speed processability.

[Description of Drawings]

The above and other objects, features and advantages of the present invention will become apparent from the following description of preferred embodiments given in conjunction with the accompanying drawings, in which:

FIGS. 1 to 7 are GPC graphs of olefin-based polymers of the examples, the comparative examples, and the control

examples of the present invention, respectively.

[Best Mode]

Hereinafter, the present invention will be described in more detail.

**Hybrid metallocene catalyst for olefin polymerization**

According to an exemplary embodiment of the present invention, a hybrid metallocene catalyst for olefin polymerization including: (a) at least one first transition metal compounds selected from transition metal compounds represented by the following Chemical Formula 1 and transition metal compounds represented by the following Chemical Formula 2; (b) at least one second transition metal compound selected from transition metal compounds represented by the following Chemical Formula 3; (c) at least one third transition metal compound selected from transition metal compounds represented by the following Chemical Formula 4, transition metal compounds represented by the following Chemical Formula 5a, and transition metal compounds represented by the following Chemical Formula 5b; and (d) a cocatalyst compound; is provided:

[Chemical Formula 1]

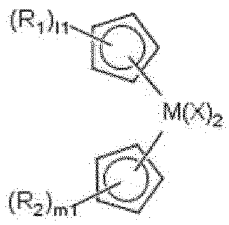

[Chemical Formula 2]

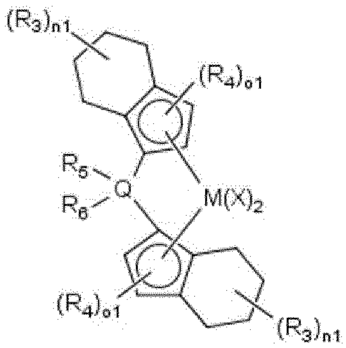

[Chemical Formula 3]

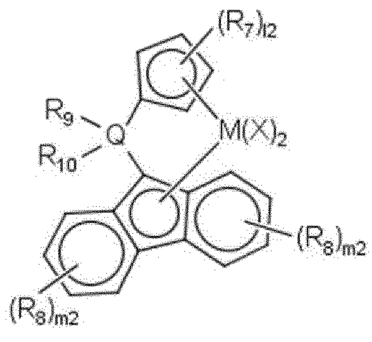

[Chemical Formula 4]

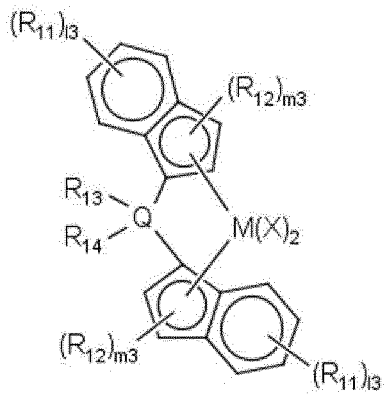

[Chemical Formula 5a]

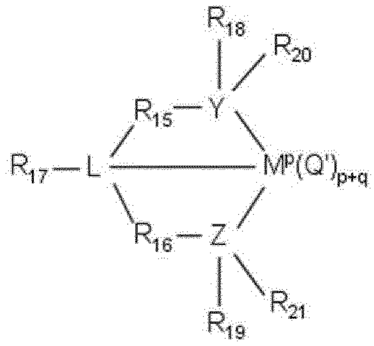

[Chemical Formula 5b]

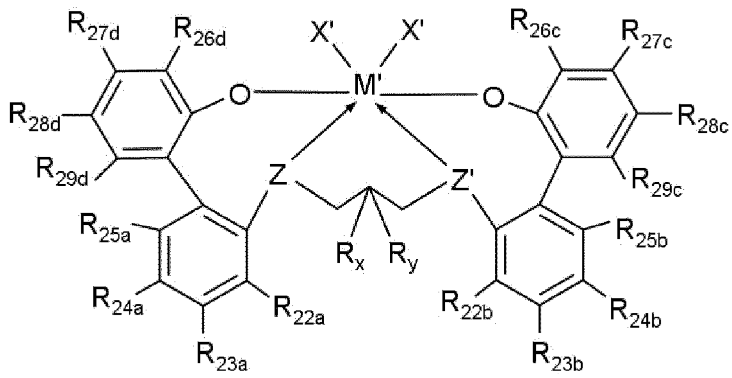

wherein l1 and m1 are independently of each other an integer of 0 to 5. Preferably, l1 is 1, and m1 is independently of each other an integer of 1 to 5,

l2, l3, m2, and n1 are independently of one another an integer of 0 to 4. Preferably, l2, l3, and m2 are 1, respectively, and each n1 is 0.

m3 and o1 are independently of each other an integer of 0 to 2. Preferably, each m3 is 1 and each o1 is 0.

P is an oxidation state of M, and is +3, +4, or +5.

q is a formal charge of a YZL ligand, and is 0, -1, - 2, or -3.

M is a Group 4 transition metal of a periodic table of elements. Specifically, M may be titanium (Ti), zirconium (Zr), or hafnium (Hf), more specifically zirconium or hafnium.

M' is titanium, zirconium, or hafnium, and is in a formal oxidation state of +2, +3, or +4, respectively. Specifically, M' may be zirconium or hafnium.

X is independently of each other a halogen, $C_{1-20}$ alkyl, $C_{2-20}$ alkenyl, $C_{2-20}$ alkynyl, $C_{6-20}$ aryl, $C_{1-20}$ alkyl $C_{6-20}$ aryl, $C_{6-20}$ aryl $C_{1-20}$ alkyl, $C_{1-20}$ alkylamido, or $C_{6-20}$ arylamido. Specifically, X may be independently of each other a halogen or $C_{1-20}$ alkyl, more specifically chlorine (Cl) or methyl.

X' is independently of each other alkyl. Specifically, X' may be independently of each other methyl.

Q is independently of each other carbon (C), silicon (Si), germanium (Ge), or tin (Sn). Specifically, Q may be independently of each other carbon (C) or silicon (Si).

Q' is an anionic leaving group and is independently of each other hydrogen, a substituted or unsubstituted $C_{1-40}$ hydrocarbon group, a substituted or unsubstituted $C_{1-40}$ heterohydrocarbon group, a heteroatom, or a halogen. Specifically, Q' may be a linear or branched alkyl group, an alkeny group, an alkynyl group, a cycloalkyl group, an aryl group, an alkylaryl group, an arylalkyl group, an acyl group, an aroyl group, an alkoxy group, an aryloxy group, an alkylthio group, a dialkylamino group, an alkoxycarbonyl group, an aryloxycarbonyl group, a carbamoyl group, an alkyl- or dialkyl-carbamoyl group, an acyloxy group, an acylamino group, an aroylamino group, a linear, branched, or cyclic alkylene group, or a combination thereof.

L is a Group 15 or Group 16 element, and preferably nitrogen.

Y is a Group 15 element, preferably nitrogen or phosphorus, and more preferably nitrogen.

Z is a Group 15 element, preferably nitrogen or phosphorus, and more preferably nitrogen.

Z' is independently of each other -O-, -S-, -N($C_{1-40}$ hydrocarbon group)- or -P($C_{1-40}$ hydrocarbon group)-. Specifically, Z' may be independently of each other -O-.

$R_1$ to $R_4$, $R_7$, $R_8$, $R_{11}$, and $R_{12}$ are independently of one another substituted or unsubstituted $C_{1-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl, substituted or unsubstituted $C_{3-20}$ heteroaryl, substituted or unsubstituted $C_{1-20}$ alkylamido, substituted or unsubstituted $C_{6-20}$ arylamido, or substituted or unsubstituted $C_{1-20}$ silyl, but these may or may not be independently of each other connected to an adjacent group to form a substituted or unsubstituted, saturated or unsaturated $C_{4-20}$ ring. Specifically, $R_1$ to $R_4$, $R_7$, $R_8$, $R_{11}$, $R_{12}$ may be independently of one another substituted or unsubstituted $C_{1-20}$ alkyl or substituted or unsubstituted $C_{6-20}$ aryl.

$R_5$, $R_6$, $R_9$, $R_{10}$, $R_{13}$, and $R_{14}$ are independently of one another substituted or unsubstituted $C_{1-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl, substituted or unsubstituted $C_{3-20}$ heteroaryl, substituted or unsubstituted $C_{1-20}$ alkylamido, substituted or unsubstituted $C_{6-20}$ arylamido, or substituted or unsubstituted $C_{1-20}$ silyl, but $R_5$ and $R_6$, $R_9$ and $R_{10}$, $R_{13}$ and $R_{14}$ may or may not be independently of one another connected to each other to form a substituted or unsubstituted, saturated or unsaturated $C_{2-20}$ ring. Specifically, $R_5$, $R_6$, $R_9$, $R_{10}$, $R_{13}$, and $R_{14}$ may be independently of one another substituted or unsubstituted $C_{1-20}$ alkyl, substituted or unsubstituted $C_{2-20}$ alkenyl, or substituted or unsubstituted $C_{6-20}$ aryl.

$R_{15}$ and $R_{16}$ are independently of each other a $C_{1-20}$ hydrocarbon group or a heteroatom-containing group, in which the heteroatom is silicon, germanium, tin, lead, or phosphorus, or $R_{15}$ and $R_{16}$ may be connected to each other. Specifically, $R_{15}$ and $R_{16}$ may be independently of each other a $C_{1-6}$ hydrocarbon group.

$R_{17}$ does not exist, or is hydrogen, $C_{1-20}$ alkyl, a halogen, or a heteroatom-containing group. Specifically, $R_{17}$ may be hydrogen or methyl.

$R_{18}$ and $R_{19}$ are independently of each other an alkyl group, an aryl group, a substituted aryl group, a cyclic alkyl group, a substituted cyclic alkyl group, or a polycyclic system. Specifically, $R_{18}$ and $R_{19}$ may be independently of each other a substituted aryl group.

$R_{20}$ and $R_{21}$ independently of each other do not exist, or may be hydrogen, an alkyl group, a halogen, a heteroatom, a hydrocarbon group, or a heteroatom-containing group.

$R_x$ and $R_y$ are independently of each other a substituted or unsubstituted $C_{1-40}$ hydrocarbon group, a substituted or unsubstituted $C_{1-40}$ heterohydrocarbon group, a halogen, or hydrogen. $R_x$ and $R_y$ may be independently of each other methyl or hydrogen.

$R_{22a}$, $R_{23a}$, $R_{24a}$, $R_{25a}$, $R_{22b}$, $R_{23b}$, $R_{24b}$, $R_{25b}$, $R_{26c}$, $R_{27c}$, $R_{28c}$, $R_{29c}$, $R_{26d}$, $R_{27d}$, $R_{28d}$, and $R_{29d}$ are independently of one another a substituted or unsubstituted $C_{1-40}$ hydrocarbon group, a substituted or unsubstituted $C_{1-40}$ heterohydrocarbon group,$-Si(R_e)_3$, $-OSi(R_e)_3$, $-Ge(R_e)_3$, $-P(R_e)_2$, $-N(R_e)_2$, $-OR_e$, $-SR_e$,$-NO_2$, -CN, $-CF_3$, $-OCF_3$, $-S(O)R_e$, $-S(O)_2R_e$, $-N=C(R_e)_2$, $-OC(O)R_e$, $-C(O)OR_e$, $-N(R)C(O)R_e$, $-C(O)N(R_e)_2$, a halogen, and hydrogen, in which $R_e$ is independently of each other a substituted or unsubstituted $C_{1-30}$ hydrocarbon group or a substituted or unsubstituted $C_{1-30}$ heterohydrocarbon group, but two or more of $R_{22a}$, $R_{23a}$, $R_{24a}$, $R_{25a}$, $R_{22b}$, $R_{23b}$, $R_{24b}$, $R_{25b}$, $R_{26c}$, $R_{27c}$, $R_{28c}$, $R_{29c}$, $R_{26d}$, $R_{27d}$, $R_{28d}$, and $R_{29d}$ may or may not form one or more cyclic structures.

In the hybrid metallocene catalyst for olefin polymerization according to an exemplary embodiment of the present invention, contents of the first transition metal compound, the second transition metal compound, and the third transition metal compound may be determined depending on activity of each catalyst. Preferably, each of the first

transition metal compound, the second transition metal compound, and the third transition metal compound may be contained at 10 wt% or more, based on the total amount of the transition metal compound in the hybrid metallocene catalyst for olefin polymerization.

The olefin-based polymer prepared in the presence of the hybrid metallocene catalyst according to an exemplary embodiment of the present invention may have a processability index represented by the following Equation 1 of 0 to 4.5, preferably 0 to 4.0:

$$\text{Processability index} = [(\text{HMW \%}) \times (\text{HMW Mw}) - (\text{LMW \%}) \times (\text{LMW Mw})] \times (\text{total PDI})/(\text{total Mw}) \quad \text{[Equation 1]}$$

wherein HMW% is area% of a high molecular weight polymer in a polymer, LMW% is area% of a low molecular weight polymer in a polymer, HMW Mw is a weight average molecular weight of a high molecular weight polymer in a polymer and is 50,000 to 600,000 g/mol; LMW Mw is a weight average molecular weight of a low molecular weight polymer in a polymer and is 5,000 to 30,000 g/mol; total PDI is a molecular weight distribution (Mn/Mw) of a polymer; and total Mw is a weight average molecular weight of a polymer, when measured with gel permeation chromatography (GPC).

The processability index was derived as a measure indicating a high-speed processability of an olefin-based polymer prepared from the hybrid metallocene catalyst. In order to develop a catalyst having improved processability, a method of using a hybrid metallocene catalyst has been suggested, but not all polyolefins prepared therefrom have excellent processability in a high-speed area. However, the present inventors confirmed that as the processability index value is smaller, the high-speed processability of the olefin-based polymer is better. That is, as seen from Equation 1, when the content ranges of the high molecular weight polymer and the low molecular weight polymer in the olefin-based polymer are appropriate, the olefin-based polymer may have a processability index value belonging to the range of the present invention (that is, 0 to 4.5, preferably 0 to 4.0). In this case, the high-speed processability of the olefin-based polymer may be excellent.

In a specific example of the present invention, the transition metal compound of Chemical Formula 1 may be at least one of transition metal compounds represented by the following Chemical Formulae 1-1 to 1-8, and the transition metal compound of Chemical Formula 2 may be a transition metal compound represented by the following Chemical Formula 2-1:

[Chemical Formula 1-1]

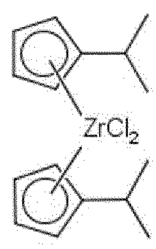

[Chemical Formula 1-2]

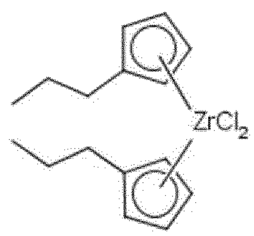

[Chemical Formula 1-3]

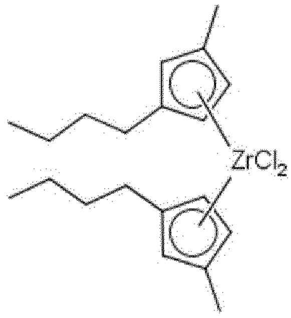

[Chemical Formula 1-4]

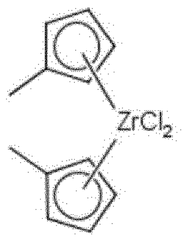

[Chemical Formula 1-5]

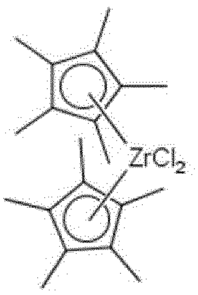

[Chemical Formula 1-6]

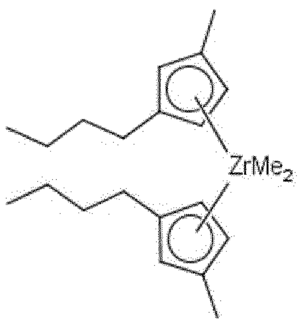

[Chemical Formula 1-7]

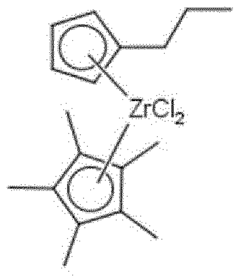

[Chemical Formula 1-8]

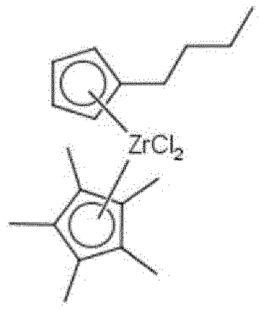

[Chemical Formula 2-1]

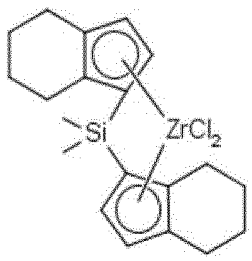

wherein Me is methyl.

In a specific example of the present invention, the transition metal compound of Chemical Formula 3 may be at least one of transition metal compounds represented by the following Chemical Formulae 3-1 to 3-10:

[Chemical Formula 3-1]

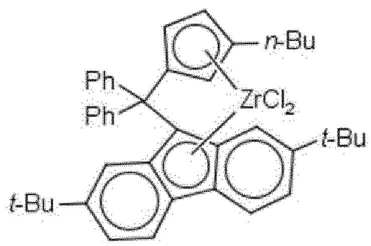

[Chemical Formula 3-2]

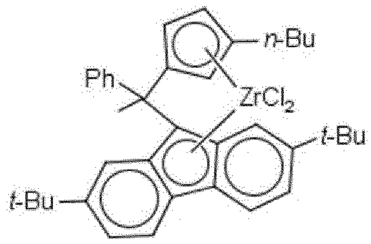

[Chemical Formula 3-3]

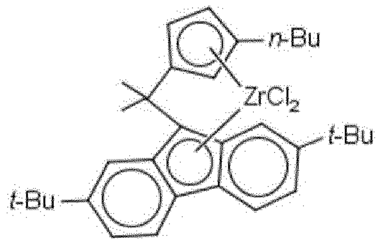

[Chemical Formula 3-4]

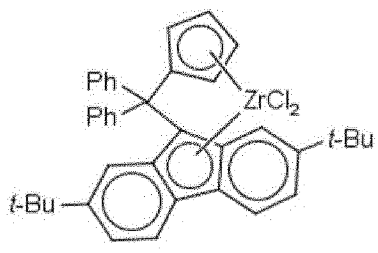

[Chemical Formula 3-5]

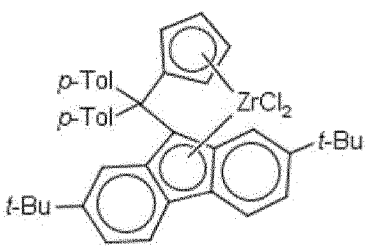

[Chemical Formula 3-6]

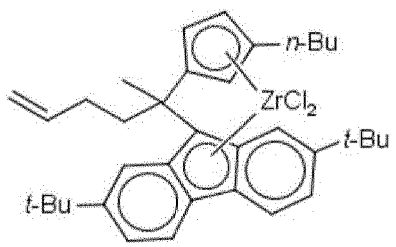

[Chemical Formula 3-7]

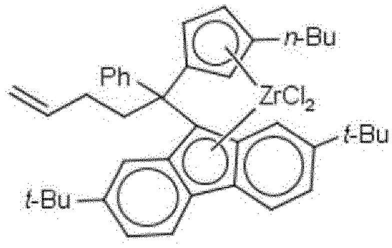

[Chemical Formula 3-8]

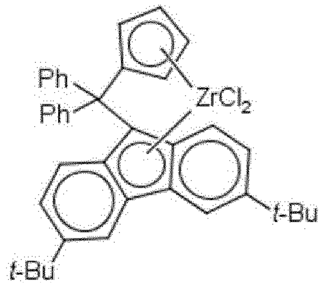

[Chemical Formula 3-9]

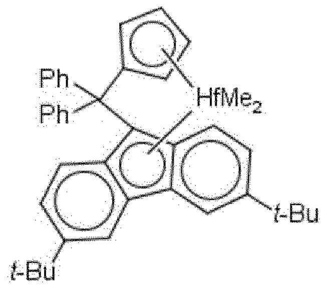

[Chemical Formula 3-10]

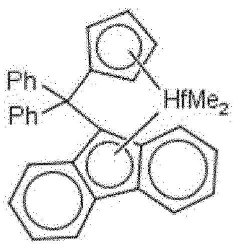

wherein Me is methyl, n-Bu is n-butyl, t-Bu is t-butyl, Ph is phenyl, and p-Tol is p-tolyl.

In a specific example of the present invention, the transition metal compound of Chemical Formula 4 may be at least one of transition metal compounds represented by the following Chemical Formulae 4-1 and 4-2, the transition metal compound of Chemical Formula 5 may be at least one of transition metal compounds represented by the following Chemical Formulae 5-1 to 5-4, and the compound of Chemical Formula 5b may be at least one of transition metal compounds represented by the following Chemical Formulae 5-5 and 5-6:

[Chemical Formula 4-1]

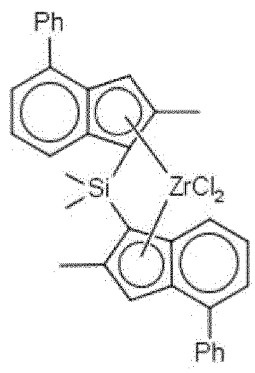

[Chemical Formula 4-2]

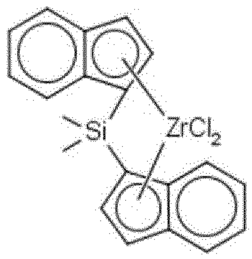

[Chemical Formula 5-1]

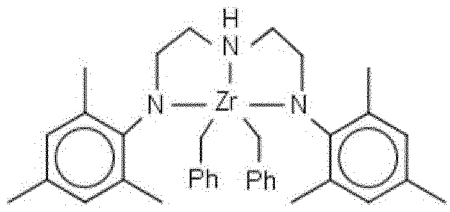

[Chemical Formula 5-2]

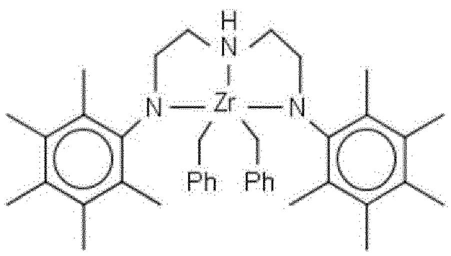

[Chemical Formula 5-3]

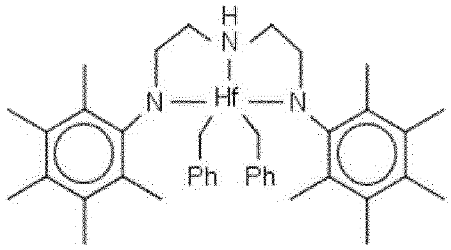

[Chemical Formula 5-4]

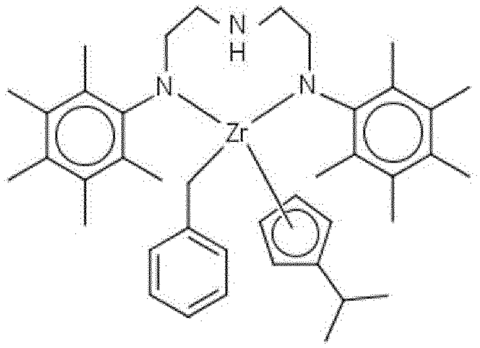

[Chemical Formula 5-5]

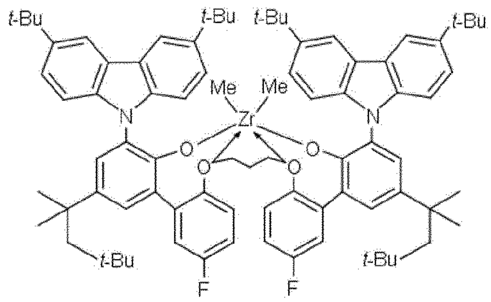

[Chemical Formula 5-6]

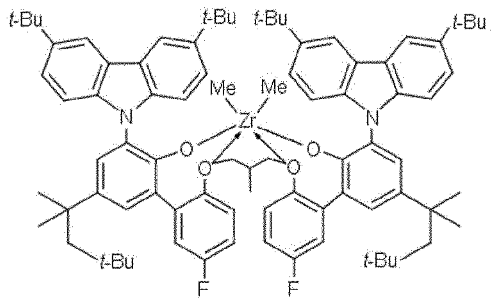

wherein Me is methyl, t-Bu is t-butyl, and Ph is phenyl.

In a specific example of the present invention, the cocatalyst compound may include at least one selected from the group consisting of a compound represented by the following Chemical Formula 6, a compound represented by the following Chemical Formula 7, and a compound represented by Chemical Formula 8:

[Chemical Formula 6]

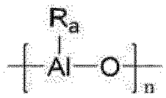

wherein n is an integer of 2 or more, and $R_a$ is a halogen atom, a hydrocarbon having 1 to 20 carbon atoms, or a hydrocarbon having 1 to 20 carbon atoms substituted by a halogen. Specifically, $R_a$ may be methyl, ethyl, n-butyl, or isobutyl.

[Chemical Formula 7]

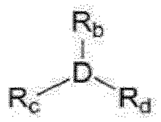

D is aluminum (Al) or boron (B), and $R_b$, $R_c$, and $R_d$ are independently of one another a halogen atom, a hydrocarbon group having 1 to 20 carbon atoms, a hydrocarbon group having 1 to 20 carbon atoms substituted by a halogen, or an alkoxy group having 1 to 20 carbon atoms. Specifically, when D is aluminum (Al), $R_b$, $R_c$, and $R_d$ may be independently of one another methyl or isobutyl, and when D is boron (B), $R_b$, $R_c$, and $R_b$ may be pentafluorophenyl, respectively.

[Chemical Formula 8] $[L-H]^+[Z(A)_4]^-$ or $[L]+[Z(A)_4]^-$

L is a neutral or cationic Lewis base, $[L-H]^+$ and $[L]^+$ are a Bronsted acid, Z is a Group 13 element, and A is independently of each other a substituted or unsubstituted aryl group having 6 to 20 carbon atoms or a substituted or unsubstituted alkyl group having 1 to 20 carbon atoms. Specifically, $[L-H]^+$ may be dimethylanilinium cation, $[Z(A)_4]^-$ may be $[B(C_6F_5)_{4]}^-$, and $[L]^+$ may be $[(C_6H_5)_3C]^+$.

An example of the compound represented by Chemical Formula 6 may include methylaluminoxane, ethylaluminoxane, isobutylaluminoxane, butylaluminoxane, and the like, and is preferably methylaluminoxane, but is not limited thereto.

An example of the compound represented by Chemical Formula 7 includes trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentylaluminum, trihexylaluminum, trioctylaluminum, ethyldimethylaluminum, methyldiethylaluminum, triphenylaluminum, tri-p-tolylaluminum, dimethylaluminummethoxide, dimethylaluminumethoxide, trimethylboron, triethylboron, triisobutylboron, tripropylboron, tributylboron, and the like, and is preferably trimethylaluminum, triethylaluminum, and triisobutylaluminum, but is not limited thereto.

An example of the compound represented by Chemical Formula 8 may include triethylammonium tetraphenylboron, tributylammonium tetraphenylboron, trimethylammonium tetraphenylboron, tripropylammonium tetraphenylboron, trimethylammonium tetra(p-tolyl)boron, trimethylammonium tetra(o,p-dimethylphenyl)boron, tributylammonium tetra(p-trifluoromethylphenyl)boron, trimethylammonium tetra(p-trifluoromethylphenyl)boron, tributylammonium tetrapentafluorophenylboron, N,N-diethylanilinium tetraphenylboron, N,N-diethylanilinium tetrapentafluorophenylboron, diethylammonium tetrapentafluorophenylboron, triphenylphosphonium tetraphenylboron, trimethylphosphonium tetraphenylboron, triethylammonium tetraphenylaluminum, tributylammonium tetraphenylaluminum, trimethylammonium tetraphenylaluminum, tripropylammonium tetraphenylaluminum, trimethylammonium tetra(p-tolyl)aluminum, tripropylammonium tetra(p-tolyl)aluminum, triethylammonium tetra(o,p-dimethylphenyl)aluminum, tributylammonium tetra(p-trifluoromethylphenyl)aluminum, trimethylammonium tetra(p-trifluoromethylphenyl)aluminum, tributylammonium tetrapentafluorophenylaluminum, N,N-diethylanilinium tetraphenylaluminum, N,N-diethylanilinium tetrapentafluorophenylaluminum, diethylammonium tetrapentatetraphenylaluminum, triphenylphosphonium tetraphenylaluminum, trimethylphosphonium tetraphenylaluminum, tripropylammonium tetra(p-tolyl)boron, triethylammonium tetra(o,p-dimethylphenyl)boron, triphenylcarbonium tetra(p-trifluoromethylphenyl)boron, triphenylcarbonium tetrapentafluorophenylboron, and the like.

In a specific example, the hybrid metallocene catalyst for olefin polymerization may further include a carrier which supports the hybrid transition metal compound, the cocatalyst compound, or both.

Herein, the carrier may include a material containing a hydroxyl group on the surface, and preferably, may use a material having highly reactive hydroxyl and siloxane groups, which is dried to remove moisture from the surface. For

example, the carrier may include at least one selected from the group consisting of silica, alumina, and magnesia. Specifically, silica, silica-alumina, silica-magnesia, and the like which are dried at a high temperature may be used as the carrier, and these may usually contain oxide, carbonate, sulfate, and nitrate components such as $Na_2O$, $K_2CO_3$, $BaSO_4$, and $Mg(NO_3)_2$. In addition, these may include carbon, zeolite, magnesium chloride, and the like. However, the carrier is not particularly limited thereto.

The carrier may have an average particle size of 10 to 250 um, preferably 10 to 150 μm, and more preferably 20 to 100 um.

The carrier may have a micropore volume of 0.1 to 10 ml/g, preferably 0.5 to 5 ml/g, and more preferably 1.0 to 3.0 ml/g.

The carrier may have a specific surface area of 1 to 1,000 $m^2$/g, preferably 100 to 800 $m^2$/g, and more preferably 200 to 600 $m^2$/g.

In a preferred example, when the carrier is silica, a drying temperature of silica may be 200 to 900°C. The drying temperature may be preferably 300 to 800°C, and more preferably 400 to 700°C. When the drying temperature is lower than 200°C, silica has too much moisture so that the moisture on the surface reacts with a first cocatalyst compound, and when the drying temperature is higher than 900°C, the structure of the carrier may collapse.

A concentration of a hydroxyl group in dried silica may be 0.1 to 5 mmol/g, preferably 0.7 to 4 mmol/g, and more preferably 1.0 to 2 mmol/g. When the concentration of the hydroxyl group is less than 0.1 mmol/g, the supported amount of the cocatalyst is lowered, and when the concentration is more than 5 mmol/g, the catalyst component becomes inactive.

The total amount of the hybrid transition metal compound supported on the carrier may be 0.001 to 1 mmol based on 1 g of the carrier. When a ratio between the hybrid transition metal compound and the carrier satisfies the above range, appropriate supported catalyst activity is shown, which is advantageous in terms of the activity maintenance and economic feasibility of a catalyst.

The total amount of the cocatalyst compound supported on the carrier may be 2 to 15 mmol based on 1 g of the carrier. When the ratio of the cocatalyst compound and the carrier satisfies the above range, it is advantageous in terms of the activity maintenance and economic feasibility of a catalyst.

One or two or more carriers may be used. For example, both the hybrid transition metal compound and the cocatalyst compound may be supported on one carrier, and each of the hybrid transition metal compound and the cocatalyst compound may be supported on two or more carriers. In addition, only one of the hybrid transition metal compound and the cocatalyst compound may be supported on the carrier.

Olefin-based polymer

An olefin-based monomer is polymerized in the presence of the catalyst for olefin polymerization according to an exemplary embodiment of the present invention, thereby preparing an olefin-based polymer.

According to another exemplary embodiment of the present invention, an olefin-based polymer which is polymerized in the presence of the hybrid metallocene catalyst for olefin polymerization, and has a density of 0.940 to 0.960 g/cm3, a melt index ($I_{2.16}$) measured with a load of 2.16 kg at 190°C of 0.02 to 2.0 g/10 min, a ratio (melt flow ratio; MFR) between a melt index ($I_{21.6}$) measured with a load of 21.6 kg and a melt index ($I_{2.16}$) measured with a load of 2.16 kg at 190°C of 30 to 200, and a processability index represented by the following Equation 1 of 0 to 4.5, preferably 0 to 4.0 is provided:

$$\text{Processability index} = [(\text{HMW }\%) \times (\text{HMW Mw}) - (\text{LMW }\%) \times (\text{LMW Mw})] \times (\text{total PDI})/(\text{total Mw}) \qquad \text{[Equation 1]}$$

wherein HMW%, LMW%, HMW Mw, LMW Mw, total PDI, and total Mw are as defined for the above hybrid metallocene catalyst.

The olefin-based polymer prepared in the presence of the hybrid metallocene catalyst for olefin polymerization according to an exemplary embodiment of the present invention has a density of 0.940 to 0.960 g/$cm^3$. Preferably, the olefin-based polymer may have a density of 0.945 to 0.955 g/cm3, more preferably 0.945 to 0.950 g/$cm^3$.

The olefin-based polymer prepared in the presence of the hybrid metallocene catalyst for olefin polymerization according to an exemplary embodiment of the present invention may have a melt index ($I_{2.16}$) measured with a load of 2.16 kg at 190°C in accordance with ASTM D 1238 of 0.02 to 2.0 g/10 min. Preferably, the olefin-based polymer may have a melt index ($I_{2.16}$) of 0.05 to 1.5 g/10 min, more preferably 0.05 to 1.0 g/10 min.

The olefin-based polymer prepared in the presence of the hybrid metallocene catalyst for olefin polymerization according to an exemplary embodiment of the present invention may have a ratio between a melt index ($I_{21.6}$) measured with a load of 21.6 kg and a melt index ($I_{2.16}$) measured with a load of 2.16 kg at 190°C in accordance with ASTM D 1238 of 30 to 200. Preferably, the olefin-based polymer may have an MFR of 50 to 150, more preferably 50 to 135.

The olefin-based polymer prepared in the presence of the hybrid metallocene catalyst for olefin polymerization according to an exemplary embodiment of the present invention has a processability index represented by Equation 1 of 0 to 4.5. Preferably, the olefin-based polymer has a processability index of 0 to 4.0.

In a specific example of the present invention, in the olefin-based polymer, an area of a low molecular weight polymer having a weight average molecular weight of 5,000 to 30,000 g/mol may be 40 to 85%, and an area of a high molecular weight polymer having a weight average molecular weight of 50,000 to 600,000 g/mol may be 15 to 60%, when measured with GPC.

In a specific example of the present invention, the olefin-based polymer may have a shear rate as defined in the following Equation 2 of 1,750 $sec^{-1}$ or more, preferably 2,0000 $sec^{-1}$ or more, when measured with a capillary rheometer: A higher shear rate is preferred, but substantially, the upper limit may be 3,500 $sec^{-1}$.

[Equation 2]

$$\dot{\gamma}_{ap} = \frac{4V}{\pi R^3}$$

wherein $\dot{\gamma}_{ap}$ is an apparent shear rate ($sec^{-1}$), V is a volume flow ($mm^3$/sec) produced by a piston, and R is a radius (mm) of a round hole capillary. The shear rate of Equation 2 is a measure of high-speed processability, and as the value is higher, the high-speed processability is better.

In a specific example of the present invention, the olefin-based polymer may be a homopolymer of an olefin-based monomer or a copolymer of olefin-based monomer and comonomer.

The olefin-based monomer is at least one selected from the group consisting of $\alpha$-olefin having 2 to 20 carbon atoms, diolefin having 1 to 20 carbon atoms, cycloolefin having 3 to 20 carbon atoms, and cyclodiolefin having 3 to 20 carbon atoms.

For example, the olefin-based monomer may be ethylene, propylene, 1-butene, 1-pentene, 4-methyl-1-pentene, 1-hexene, 1-heptene, 1-octene, 1-decene, 1-undecene, 1-dodecene, 1-tetradecene, 1-hexadecene, or the like and the olefin-based polymer may be a homopolymer including only one of the olefin-based monomers exemplified above or a copolymer including two or more thereof.

In an illustrative example, the olefin-based polymer may be a copolymer in which ethylene and $C_{3-20}$ $\alpha$-olefin are copolymerized, and a copolymer in which ethylene and 1-hexene are copolymerized is preferred, but is not limited thereto.

In this case, the content of ethylene is preferably 55 to 99.9 wt%, and more preferably 90 to 99.9 wt%. The content of the $\alpha$-olefin-based comonomer preferably 0.1 to 45 wt%, and more preferably 0.1 to 30 wt%.

In an illustrative example, the olefin-based polymer may be polymerized by a polymerization reaction such as free radical, cationic, coordination, condensation, and addition polymerization, but is not limited thereto.

In a preferred specific example, the olefin-based polymer may be prepared by a gas phase polymerization method, a solution polymerization method, a slurry polymerization method, or the like. When the olefin-based polymer is prepared by a solution polymerization method or a slurry polymerization method, an example of the solvent to be used may include a $C_{5-12}$ aliphatic hydrocarbon solvent such as pentane, hexane, heptane, nonane, decane, and isomers thereof; an aromatic hydrocarbon solvent such as toluene and benzene; a hydrocarbon solvent substituted by a chlorine atom such as dichloromethane and chlorobenzene; and a mixture thereof, but is not limited thereto.

[Best Mode for Carrying out the Invention]

## Examples

Hereinafter, the present invention will be described in more detail through the examples and the comparative examples. However, the following examples are only illustrative of the present invention, and do not limit the scope of the present invention.

### Preparation Example 1

1.4 g of the transition metal compound of Chemical Formula 1-1, 0.63 g of the transition metal compound of Chemical Formula 3-1, and 2.72 g of the transition metal compound of Chemical Formula 4-1 were mixed with 825 g of a toluene solution of 10 wt% of methylaluminoxane (MAO) (Al/Zr = 150) in a glove box and stirred at room temperature for 1 hour. Meanwhile, 200 g of silica (XP2402) was added to a reactor, and 1,000 ml of purified toluene was added and mixed. The solution of the transition metal compound was injected into the obtained silica slurry and stirring was performed

for 3 hours in an oil bath at 75°C. After completion of supporting and sufficient separation of solid/liquid, a supernatant was removed. The supported catalyst was washed 3 times using toluene, and drying was performed in vacuum at 60°C for 10 hours to obtain 280 g of a hybrid supported catalyst in a free flow powder form.

Preparation Example 2

280 g of a hybrid supported catalyst in a free flow powder form was obtained in the same manner as in Preparation Example 1, except that 1.4 g of the transition metal compound of Chemical Formula 1-3, 0.63 g of the transition metal compound of Chemical Formula 3-1, and 2.72 g of the transition metal compound of Chemical Formula 4-1 were used.

Preparation Example 3

280 g of a hybrid supported catalyst in a free flow powder form was obtained in the same manner as in Preparation Example 1, except that 1.6 g of the transition metal compound of Chemical Formula 2-1, 0.63 g of the transition metal compound of Chemical Formula 3-1, and 2.72 g of the transition metal compound of Chemical Formula 4-1 were used.

Preparation Example 4

280 g of a hybrid supported catalyst in a free flow powder form was obtained in the same manner as in Preparation Example 1, except that 1.3 g of the transition metal compound of Chemical Formula 1-1, 0.63 g of the transition metal compound of Chemical Formula 3-1, and 2.72 g of the transition metal compound of Chemical Formula 5-1 were used.

Preparation Example 5

280 g of a hybrid supported catalyst in a free flow powder form was obtained in the same manner as in Preparation Example 1, except that 1.5 g of the transition metal compound of Chemical Formula 1-1, 1.25 g of the transition metal compound of Chemical Formula 3-1, and 2.20 g of the transition metal compound of Chemical Formula 4-1 were used.

Preparation Example 6

280 g of a hybrid supported catalyst in a free flow powder form was obtained in the same manner as in Preparation Example 1, except that 1.5 g of the transition metal compound of Chemical Formula 1-1, 1.30 g of the transition metal compound of Chemical Formula 3-1, and 2.40 g of the transition metal compound of Chemical Formula 5-1 were used.

Control Example

A polyethylene product for wires (Lotte Chemical 5305) requiring high-speed processability was used.

Experimental Example

Ethylene and 1-hexene were copolymerized in a continuous fluidized bed gas phase reactor, using each supported catalyst obtained in the above exemplary embodiments. Hydrogen was added for adjusting the molecular weight of the polymer. Polymerization conditions are summarized in the following Table 1:

[Table 1]

| Classification | Example 1 | Example 2 | Example 3 | Comparative Example 1 | Comparative Example 2 | Example 4 |
|---|---|---|---|---|---|---|
| Catalyst | Preparation Example 1 | Preparation Example 2 | Preparation Example 3 | Preparation Example 4 | Preparation Example 5 | Preparation Example 6 |
| Polymerization temperature (°C) | 90 | 90 | 90 | 90 | 90 | 90 |
| Catalyst injection amount (g/h) | 2.06 | 5.87 | 5.47 | 3.75 | 1.91 | 2.41 |
| Hydrogen injection amount (g/h) | 7.51 | 14.81 | 13.52 | 11.79 | 10.60 | 4.23 |

(continued)

| Classification | Example 1 | Example 2 | Example 3 | Comparative Example 1 | Comparative Example 2 | Example 4 |
|---|---|---|---|---|---|---|
| 1-Hexene injection amount (kg/h) | 206 | 154 | 147 | 274 | 403 | 200 |
| Hydrogen/ ethylene concentration ratio (%) | 0.11 | 0.41 | 0.40 | 0.29 | 0.21 | 0.08 |
| 1-Hexene/ ethylene concentration ratio (%) | 0.79 | 0.61 | 0.68 | 0.80 | 1.04 | 0.75 |
| Production per hour (kg/h) | 3,924 | 1,402 | 1,433 | 2,265 | 4,805 | 3,652 |

Physical properties of the olefin-based polymers prepared using each supported catalyst obtained in the examples and the comparative examples were measured as follows. The measurement results are shown in the following Tables 2 and 3 and FIG. 1.

(1) Melt flow ratio (MFR)

Each melt index was measured with a load of 21.6 kg and a load of 2.16 kg at 190°C in accordance with ASTM D 1238, and the ratio ($MI_{21.6}/MI_{2.16}$) was calculated.

(2) Density

Measured according to ASTM D 1505.

(3) Shear rate

Measured using a Gottfert RG25 capillary rheometer. Measurement conditions were a round hole, a length of 20 mm, an effective length of 20 mm, diameter/width of 2, a height of 0 mm, a run angle of 180°C, and at 230°C, a piston diameter of 15 mm and a capillary diameter of 2 mm. The shear rate was measured based on a sear rate at which shark skin or melt fracture occurs, and calculated from Equation 2.

(4) Tensile strength at yield (tensile at yield)

Measured in accordance with ASTM D638. Stress was applied on a No. 4 standard specimen at a speed of 50 mm/min, and a stress section when macroscopic plastic deformation began was measured.

(5) Gel transmission chromatography

A molecular weight distribution was analyzed using gel transmission chromatography (GPC)-FTIR. In a molecular weight distribution graph obtained from GPC analysis results, low molecular weight (LMW) components and high molecular weight (HMW) components were separated with Mixture Gaussian, and the average molecular weight and the integral ratio of LMW and HMW were calculated. The measurement results are shown in FIGS. 1 to 7.

[Table 2]

| Classification | Examples 1 | Examples 2 | Examples 3 | Comparative Examples 1 | Comparative Examples 2 | Examples 4 | Control Example |
|---|---|---|---|---|---|---|---|
| $I_{2.16}$ (g/10 min) | 0.74 | 0.65 | 0.79 | 0.66 | 0.82 | 0.67 | 0.74 |

(continued)

| Classification | Examples 1 | Examples 2 | Examples 3 | Comparative Examples 1 | Comparative Examples 2 | Examples 4 | Control Example |
|---|---|---|---|---|---|---|---|
| $I_{21.6}$ (g/10 min) | 75 | 37 | 45 | 43 | 83 | 65 | 49 |
| MFR ($I_{2.16}/I_{21.6}$) | 101 | 57 | 57 | 65 | 101 | 97 | 65 |
| Density (kg/cm$^3$) | 0.948 | 0.944 | 0.948 | 0.946 | 0.946 | 0.946 | 0.945 |

[Table 3]

| | Tensile strength at yield (kg/cm$^2$) | LMW (g/mol) | HMW (g/mol) | CFC (GPC) | | Processability index | Shear rate (1/sec) |
|---|---|---|---|---|---|---|---|
| | | | | Mw (g/mol) | PDI | | |
| Example 1 | 265 | 76% | 21% | 121,815 | 12.2 | 4.1 | 1,750 |
| | | 18,725 | 260,166 | | | | |
| Example 2 | 253 | 73% | 24% | 115,548 | 26.0 | 4.0 | 2,000 |
| | | 20,996 | 140,437 | | | | |
| Example 3 | 263 | 76% | 20% | 114,324 | 26.0 | 4.3 | 1,750 |
| | | 19,785 | 168,733 | | | | |
| Comparative Example 1 | 244 | 74% | 22% | 121,565 | 20.0 | 6.1 | 1,250 |
| | | 17,969 | 229,002 | | | | |
| Comparative Example 2 | 264 | 70% | 25% | 116,840 | 18.8 | 7.7 | 750 |
| | | 13,381 | 228,549 | | | | |
| Example 4 | 241 | 81% | 13% | 150,835 | 12.5 | 3.5 | 2,250 |
| | | 27,525 | 494,800 | | | | |
| Control example | 226 | 21% | 80% | 173,181 | 22.2 | 4.8 | 1,750 |
| | | 8,673 | 49,247 | | | | |

As confirmed from Tables 2 and 3, the olefin-based polymers of the examples in which the processability index belonged to the range of the present invention had a high shear rate and excellent high-speed processability. However, the olefin-based polymers of the comparative examples of which the processability index did not belong to the range of the present invention had a low shear rate and poor high-speed processability.

In addition, upon comparison of Example 2 and the control example, the olefin-based polymer of Example 2 secured sufficient mechanical properties only with a lower content of high molecular weight (HMW) component than the high molecular weight (HMW) component of the control example, and also showed better processability index and shear rate (high-speed processability), even with a lower MFR than the olefin-based polymer of the control example.

[Industrial Applicability]

The hybrid metallocene catalyst according to an exemplary embodiment of the present invention allows preparation of an olefin polymer having a broad molecular weight distribution and excellent high-speed processability. In addition, an olefin-based polymer prepared in the presence of the catalyst has a broad molecular weight distribution and excellent high-speed processability.

## Claims

1. A hybrid metallocene catalyst for olefin polymerization comprising: (a) at least one first transition metal compound selected from a transition metal compound represented by the following Chemical Formula 1 and a transition metal compound represented by the following Chemical Formula 2; (b) at least one second transition metal compound selected from a transition metal compound represented by the following Chemical Formula 3; (c) at least one third transition metal compound selected from a transition metal compound represented by the following Chemical Formula 4, a transition metal compound represented by the following Chemical Formula 5a, and a transition metal compound represented by the following Chemical Formula 5b; and (d) a cocatalyst compound, wherein an olefin-based polymer prepared in the presence of the catalyst has a processability index represented by the following Equation 1 of 0 to 4.5:

[Chemical Formula 1]

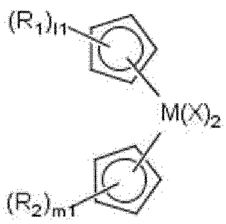

[Chemical Formula 2]

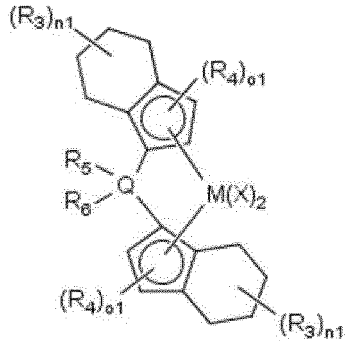

[Chemical Formula 3]

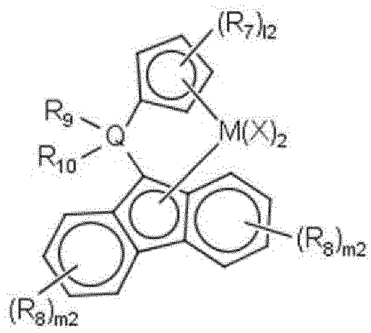

[Chemical Formula 4]

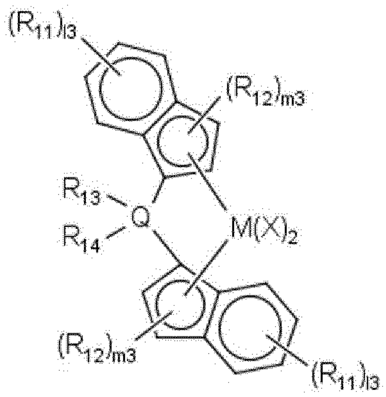

[Chemical Formula 5a]

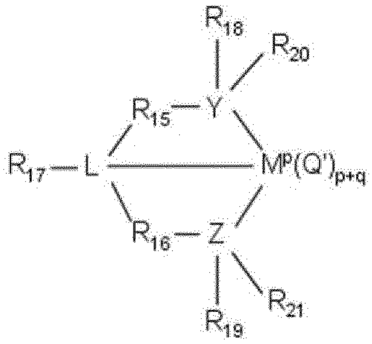

[Chemical Formula 5b]

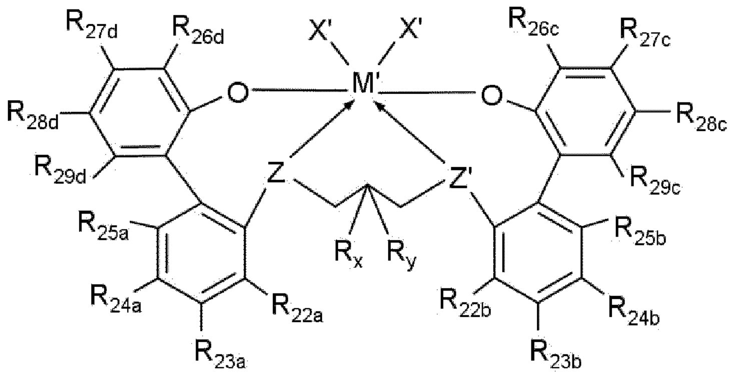

Processability index = [(HMW %) × (HMW Mw) - (LMW %) × (LMW Mw)] × (total PDI)/(total Mw) [Equation 1]

wherein l1 and m1 are independently of each other an integer of 0 to 5,

l2, l3, m2, and n1 are independently of one another an integer of 0 to 4;
m3 and o1 are independently of each other an integer of 0 to 2,
p is an oxidation state of M, and is +3, +4, or +5,
q is a formal charge of a YZL ligand, and is 0, -1, - 2, or -3,
M is independently of each other titanium (Ti), zirconium (Zr), or hafnium (Hf),

M' is titanium, zirconium, or hafnium, and is in a formal oxidation state of +2, +3, or +4, respectively,
X is independently of each other a halogen, $C_{1-20}$ alkyl, $C_{2-20}$ alkenyl, $C_{2-20}$ alkynyl, $C_{6-20}$ aryl, $C_{1-20}$ alkyl $C_{6-20}$ aryl, $C_{6-20}$ aryl $C_{1-20}$ alkyl, $C_{1-20}$ alkylamido, or $C_{6-20}$ arylamido,
X' is independently of each other alkyl,
Q is independently of each other carbon (C), silicon (Si), germanium (Ge), or tin (Sn),
Q' is an anionic leaving group and is independently of each other hydrogen, a substituted or unsubstituted $C_{1-40}$ hydrocarbon group, a substituted or unsubstituted $C_{1-40}$ heterohydrocarbon group, a heteroatom, or a halogen,
L is a Group 15 or Group 16 element,
Y is a Group 15 element,
Z is a Group 15 element,
Z' is independently of each other -O-, -S-, -N($C_{1-40}$ hydrocarbon group)-, or -P($C_{1-40}$ hydrocarbon group)-,
$R_1$ to $R_4$, $R_7$, $R_8$, $R_{11}$, and $R_{12}$ are independently of one another substituted or unsubstituted $C_{1-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl, substituted or unsubstituted $C_{3-20}$ heteroaryl, substituted or unsubstituted $C_{1-20}$ alkylamido, substituted or unsubstituted $C_{6-20}$ arylamido, or substituted or unsubstituted $C_{1-20}$ silyl, but these may or may not be independently of each other connected to an adjacent group to form a substituted or unsubstituted, saturated or unsaturated $C_{4-20}$ ring,
$R_5$, $R_6$, $R_9$, $R_{10}$, $R_{13}$, and $R_{14}$ are independently of each other substituted or unsubstituted $C_{1-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl, substituted or unsubstituted $C_{3-20}$ heteroaryl, substituted or unsubstituted $C_{1-20}$ alkylamido, substituted or unsubstituted $C_{6-20}$ arylamido, or substituted or unsubstituted $C_{1-20}$ silyl, but $R_5$ and $R_6$, $R_9$ and $R_{10}$, and $R_{13}$ and $R_{14}$ may or may not be independently of one another connected to each other to form a substituted or unsubstituted, saturated or unsaturated $C_{2-20}$ ring,
$R_{15}$ and $R_{16}$ are independently of each other a $C_{1-20}$ hydrocarbon group or a heteroatom-containing group, in which the heteroatom is silicon, germanium, tin, lead, or phosphorus, or $R_{15}$ and $R_{16}$ may be connected to each other,
$R_{17}$ does not exist, or is hydrogen, $C_{1-20}$ alkyl, a halogen, or a heteroatom-containing group,
$R_{18}$ and $R_{19}$ are independently of each other an alkyl group, an aryl group, a substituted aryl group, a cyclic alkyl group, a substituted cyclic alkyl group, or a polycyclic system,
$R_{20}$ and $R_{21}$ independently of each other do not exist, or may be hydrogen, an alkyl group, a halogen, a heteroatom, a hydrocarbon group, or a heteroatom-containing group,
$R_x$ and $R_y$ are independently of each other a substituted or unsubstituted $C_{1-40}$ hydrocarbon group, a substituted or unsubstituted $C_{1-40}$ heterohydrocarbon group, a halogen, or hydrogen,
$R_{22a}$, $R_{23a}$, $R_{24a}$, $R_{25a}$, $R_{22b}$, $R_{23b}$, $R_{24b}$, $R_{25b}$, $R_{26c}$, $R_{27c}$, $R_{28c}$, $R_{29c}$, $R_{26d}$, $R_{27d}$, $R_{28d}$, and $R_{29d}$ are independently of one another a substituted or unsubstituted $C_{1-40}$ hydrocarbon group, a substituted or unsubstituted $C_{1-40}$ heterohydrocarbon group, - Si $(R_e)_3$, $-OSi(R_e)_3$, $-Ge(R_e)_3$, $-P(R_e)_2$, $-N(R_e)_2$, $-OR_e$, $-SR_e$, - $NO_2$, -CN, $-CF_3$, $-OCF_3$, $-S(O)R_e$, $-S(O)_2R_e$, $-N{=}C(R_e)_2$, $-OC(O)R_e$, $-C(O)OR_e$, $-N(R)C(O)R_e$, $-C(O)N(R_e)_2$, a halogen, and hydrogen, in which $R_e$ is independently of each other a substituted or unsubstituted $C_{1-30}$ hydrocarbon group or a substituted or unsubstituted $C_{1-30}$ heterohydrocarbon group, but two or more of $R_{22a}$, $R_{23a}$, $R_{24a}$, $R_{25a}$, $R_{22b}$, $R_{23b}$, $R_{24b}$, $R_{25b}$, $R_{26c}$, $R_{27c}$, $R_{28c}$, $R_{29c}$, $R_{26d}$, $R_{27d}$, $R_{28d}$, and $R_{29d}$ may or may not form one or more cyclic structures, and
HMW% is area% of a high molecular weight polymer in a polymer, LMW% is area% of a low molecular weight polymer in a polymer, HMW Mw is a weight average molecular weight of a high molecular weight polymer in a polymer and is 50,000 to 600,000 g/mol; LMW Mw is a weight average molecular weight of a low molecular weight polymer in a polymer and is 5,000 to 30,000 g/mol; total PDI is a molecular weight distribution (Mn/Mw) of a polymer; and total Mw is a weight average molecular weight of a polymer, when measured with gel permeation chromatography.

**2.** The hybrid metallocene catalyst for olefin polymerization of claim 1, wherein the olefin-based polymer prepared in the presence of the catalyst has the processability index of 0 to 4.0.

**3.** The hybrid metallocene catalyst for olefin polymerization of claim 1, wherein the transition metal compound of Chemical Formula 1 is at least one of transition metal compounds represented by the following Chemical Formulae 1-1 to 1-8, and the transition metal compound of Chemical Formula 2 is a transition metal compound represented by the following Chemical Formula 2-1:

[Chemical Formula 1-1]

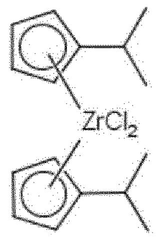

[Chemical Formula 1-2]

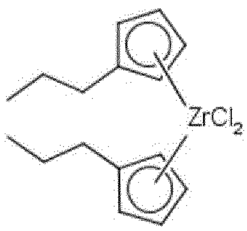

[Chemical Formula 1-3]

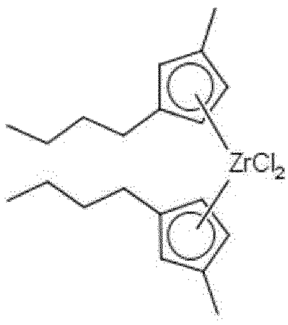

[Chemical Formula 1-4]

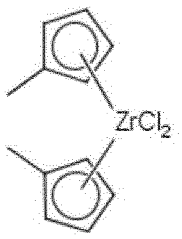

[Chemical Formula 1-5]

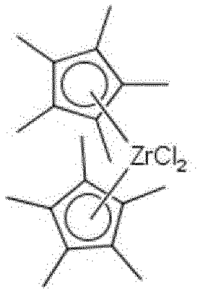

[Chemical Formula 1-6]

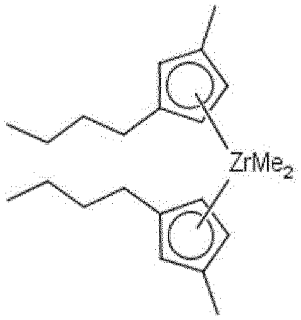

[Chemical Formula 1-7]

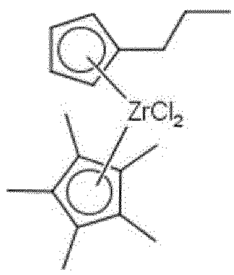

[Chemical Formula 1-8]

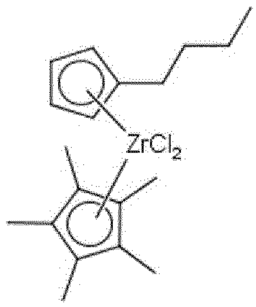

[Chemical Formula 2-1]

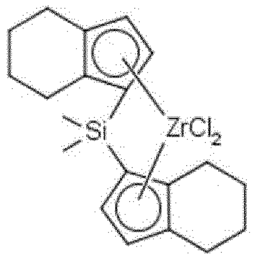

wherein Me is methyl.

**4.** The hybrid metallocene catalyst for olefin polymerization of claim 1, wherein the transition metal compound of Chemical Formula 3 is at least one of transition metal compounds represented by the following Chemical Formulae 3-1 to 3-10:

[Chemical Formula 3-1]

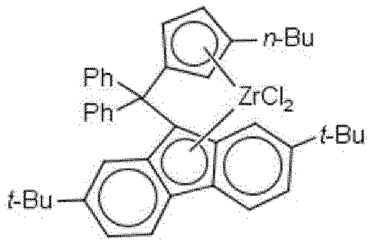

[Chemical Formula 3-2]

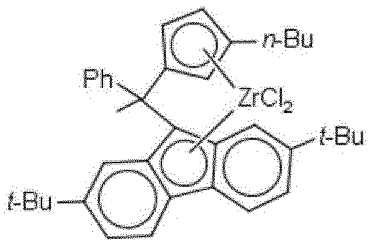

[Chemical Formula 3-3]

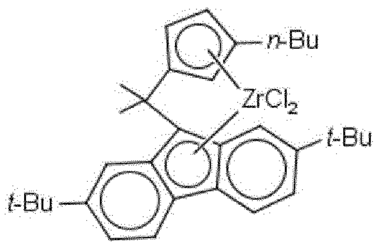

[Chemical Formula 3-4]

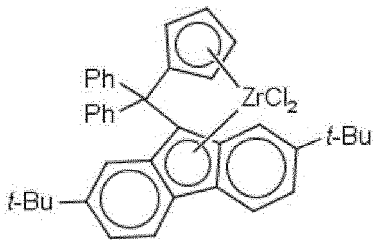

[Chemical Formula 3-5]

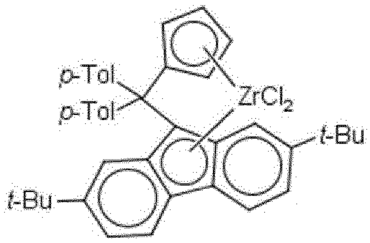

[Chemical Formula 3-6]

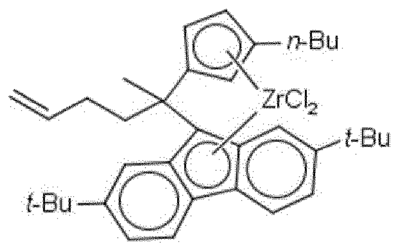

[Chemical Formula 3-7]

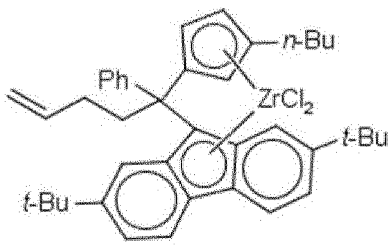

[Chemical Formula 3-8]

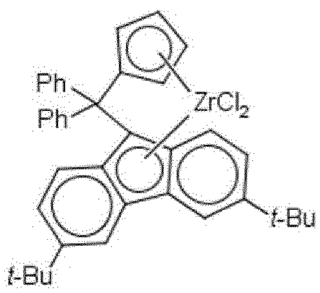

[Chemical Formula 3-9]

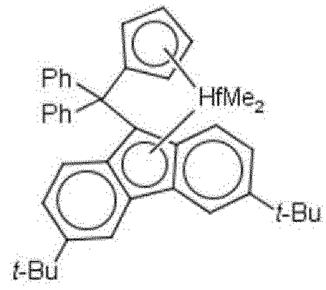

[Chemical Formula 3-10]

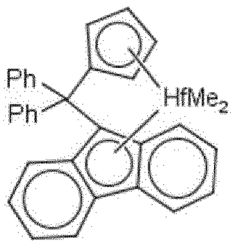

wherein Me is methyl, n-Bu is n-butyl, t-Bu is t-butyl, Ph is phenyl, and p-Tol is p-tolyl.

**5.** The hybrid metallocene catalyst for olefin polymerization of claim 1, wherein the transition metal compound of Chemical Formula 4 is at least one of transition metal compounds represented by the following Chemical Formulae 4-1 and 4-2, the transition metal compound of Chemical Formula 5a is at least one of transition metal compounds represented by the following Chemical Formulae 5-1 to 5-4, and the compound of Chemical Formula 5b is at least one of transition metal compounds represented by the following Chemical Formulae 5-5 and 5-6:

[Chemical Formula 4-1]

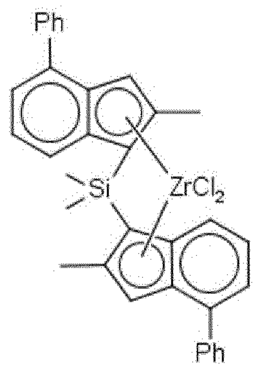

[Chemical Formula 4-2]

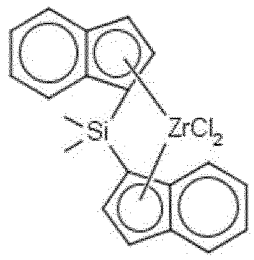

[Chemical Formula 5-1]

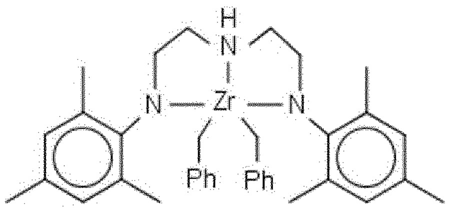

[Chemical Formula 5-2]

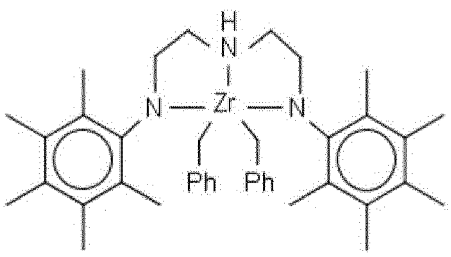

[Chemical Formula 5-3]

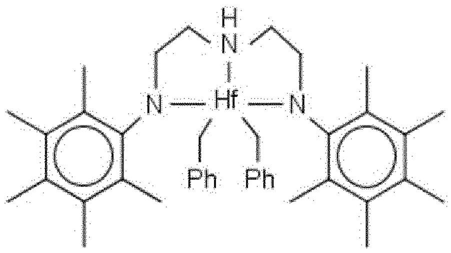

[Chemical Formula 5-4]

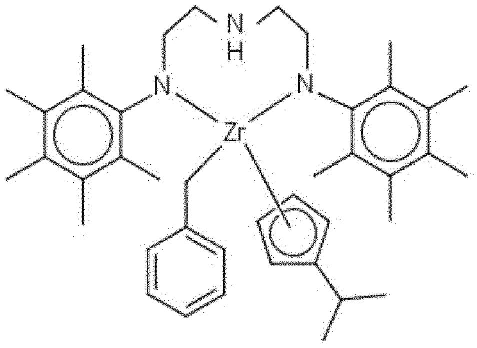

[Chemical Formula 5-5]

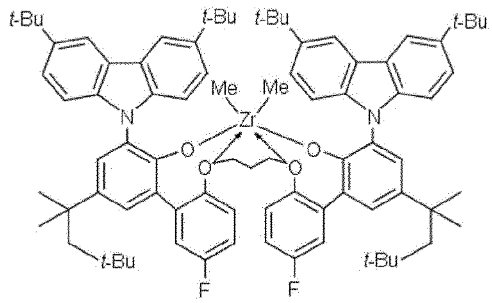

[Chemical Formula 5-6]

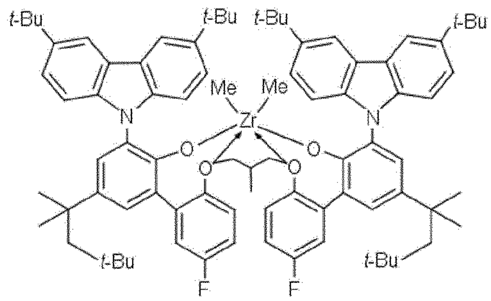

wherein Me is methyl, t-Bu is t-butyl, and Ph is phenyl.

**6.** The hybrid metallocene catalyst for olefin polymerization of claim 1, wherein the cocatalyst compound includes at least one selected from the group consisting of a compound represented by the following Chemical Formula 6, a compound represented by the following Chemical Formula 7, and a compound represented by Chemical Formula 8:

[Chemical Formula 6]

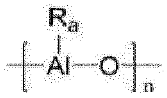

[Chemical Formula 7]

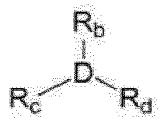

[Chemical Formula 8] $[L-H]^+[Z(A)_4]^-$ or $[L]+[Z(A)_4]^-$

wherein n is an integer of 2 or more, and $R_a$ is a halogen atom, a hydrocarbon group having 1 to 20 carbon atoms, or a hydrocarbon group having 1 to 20 carbon atoms substituted by a halogen,

D is aluminum (Al) or boron (B), and $R_b$, $R_c$, and $R_d$ are independently of one another a halogen atom, a hydrocarbon group having 1 to 20 carbon atoms, a hydrocarbon group having 1 to 20 carbon atoms substituted by a halogen, or an alkoxy group having 1 to 20 carbon atoms, and
L is a neutral or cationic Lewis base, $[L-H]^+$ and $[L]^+$ are a Bronsted acid, Z is a Group 13 element, and A is independently of each other a substituted or unsubstituted aryl group having 6 to 20 carbon atoms or a substituted or unsubstituted alkyl group having 1 to 20 carbon atoms.

**7.** The hybrid metallocene catalyst for olefin polymerization of claim 6, wherein the compound represented by Chemical Formula 6 is at least one selected from the group consisting of methylaluminoxane, ethylaluminoxane, isobutylaluminoxane, and butylaluminoxane.

**8.** The hybrid metallocene catalyst for olefin polymerization of claim 6, wherein the compound represented by Chemical Formula 7 is at least one selected from the group consisting of trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentylaluminum, trihexylaluminum, trioctylaluminum, ethyldimethylaluminum, methyldiethylaluminum, triphenylaluminum, tri-p-tolylaluminum, dimethylaluminummethoxide, dimethylaluminumethoxide, trimethylboron, triethylboron, triisobutylboron, tripropylboron, and tributylboron.

**9.** The hybrid metallocene catalyst for olefin polymerization of claim 6, wherein the compound represented by Chemical Formula 8 is at least one selected from the group consisting of triethylammonium tetraphenylboron, tributylammonium tetraphenylboron, trimethylammonium tetraphenylboron, tripropylammonium tetraphenylboron, trimethylammonium tetra(p-tolyl)boron, trimethylammonium tetra(o,p-dimethylphenyl)boron, tributylammonium tetra(p-trifluoromethylphenyl)boron, trimethylammonium tetra(p-trifluoromethylphenyl)boron, tributylammonium tetrapentafluorophenylboron, N,N-diethylanilinium tetraphenylboron, N,N-diethylanilinium tetrapentafluorophenylboron, diethylammonium tetrapentafluorophenylboron, triphenylphosphonium tetraphenylboron, trimethylphosphonium tetraphenylboron, triethylammonium tetraphenylaluminum, tributylammonium tetraphenylaluminum, trimethylammonium tetraphenylaluminum, tripropylammonium tetraphenylaluminum, trimethylammonium tetra(p-tolyl)aluminum, tripropylammonium tetra(p-tolyl)aluminum, triethylammonium tetra(o,p-dimethylphenyl)aluminum, tributylammonium tetra(p-trifluoromethylphenyl)aluminum, trimethylammonium tetra(p-trifluoromethylphenyl)aluminum, tributylammonium tetrapentafluorophenylaluminum, N,N-diethylanilinium tetraphenylaluminum, N,N-diethylanilinium tetrapentafluorophenylaluminum, diethylammonium tetrapentatetraphenylaluminum, triphenylphosphonium tetraphenylaluminum, trimethylphosphonium tetraphenylaluminum, tripropylammonium tetra(p-tolyl)boron, triethylammonium tetra(o,p-dimethylphenyl)boron, triphenylcarbonium tetra(p-trifluoromethylphenyl)boron, and triphenylcarbonium tetrapentafluorophenylboron.

**10.** The hybrid metallocene catalyst for olefin polymerization of claim 1, further comprising a carrier which supports the hybrid transition metal compound, the cocatalyst compound, or both.

**11.** The hybrid metallocene catalyst for olefin polymerization of claim 10, wherein the carrier includes at least one selected from the group consisting of silica, alumina, and magnesia.

**12.** The hybrid metallocene catalyst for olefin polymerization of claim 10, wherein a total amount of the hybrid transition metal compound supported on the carrier is 0.001 to 1 mmol based on 1 g of the carrier, and a total amount of the cocatalyst compound supported on the carrier is 2 to 15 mmol based on 1 g of the carrier.

**13.** An olefin-based polymer which is polymerized in the presence of the hybrid metallocene catalyst for olefin polymerization of any one of claims 1 to 12, and has a density of 0.940 to 0.960 g/cm3, a melt index ($I_{2.16}$) measured with a load of 2.16 kg at 190°C of 0.02 to 2.0 g/10 min, a ratio (melt flow ratio; MFR) between a melt index ($I_{21.6}$) measured with a load of 21.6 kg and a melt index ($I_{2.16}$) measured with a load of 2.16 kg at 190°C of 30 to 200, and a processability index represented by the following Equation 1 of 0 to 4.5:

Processability index = [(HMW %) × (HMW Mw) - (LMW %) × (LMW Mw)] × (total PDI)/(total Mw) [Equation 1]

wherein HMW%, LMW%, HMW Mw, LMW Mw, total PDI, and total Mw are as defined in claim 1.

**14.** The olefin-based polymer of claim 13, wherein the processability index is 0 to 4.0.

**15.** The olefin-based polymer of claim 13, wherein an area of a low molecular weight polymer having a weight average molecular weight of 5,000 to 30,000 g/mol is 40 to 85%, and an area of a high molecular weight polymer having a weight average molecular weight of 50,000 to 600,000 g/mol is 15 to 60%, when measured with GPC.

**16.** The olefin-based polymer of claim 13, wherein the olefin-based polymer has a shear rate defined by the following Equation 2 of 1,750 $sec^{-1}$ or more, when measured with a capillary rheometer:

[Equation 2]

$$\dot{\gamma}_{ap} = \frac{4V}{\pi R^3}$$

wherein $\dot{\gamma}_{ap}$ is an apparent shear rate ($sec^{-1}$), V is a volume flow ($mm^3$/sec) produced by a piston, and R is a radius (mm) of a round hole capillary.

**17.** The olefin-based polymer of claim 16, wherein the olefin-based polymer has a shear rate of 2,000 $sec^{-1}$ or more.

[FIG. 1]

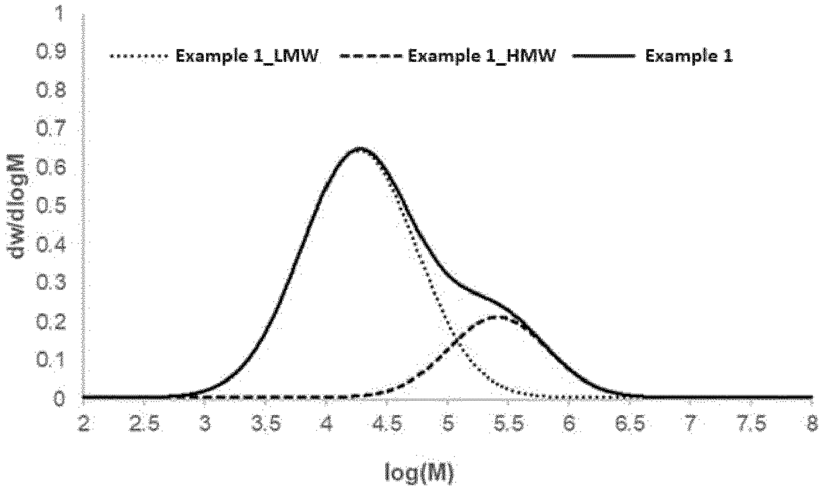
Example 1_LMW
Example 1_HMW
Example 1
dw/dlogM
log(M)
0
0.1
0.2
0.3
0.4
0.5
0.6
0.7
0.8
0.9
1
2
2.5
3
3.5
4
4.5
5
5.5
6
6.5
7
7.5
8

[FIG. 2]

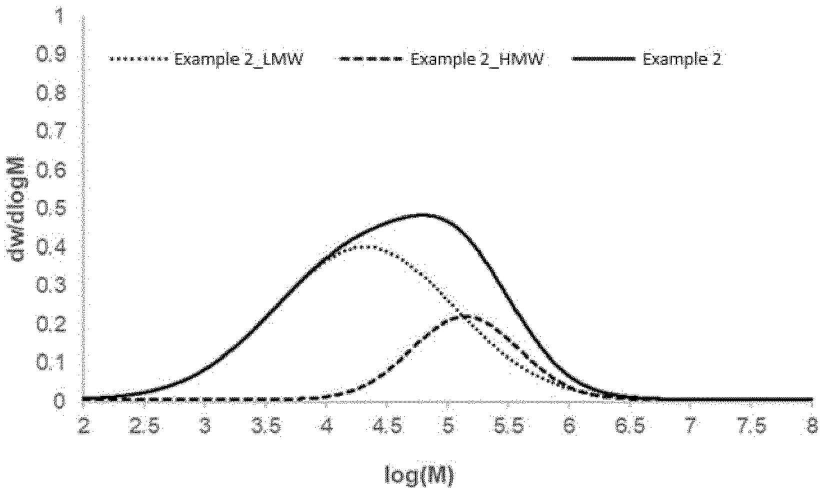
Example 2_LMW
Example 2_HMW
Example 2
dw/dlogM
log(M)
0
0.1
0.2
0.3
0.4
0.5
0.6
0.7
0.8
0.9
1
2
2.5
3
3.5
4
4.5
5
5.5
6
6.5
7
7.5
8

[FIG. 3]

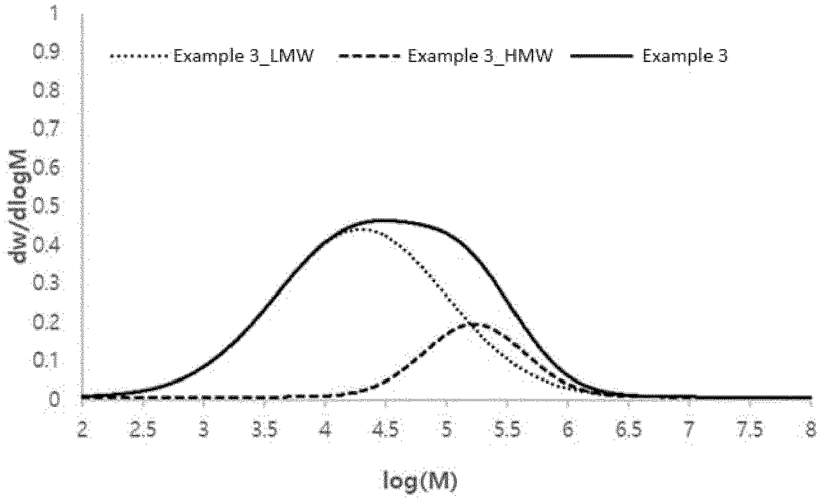
Example 3_LMW
Example 3_HMW
Example 3
dw/dlogM
log(M)
0
0.1
0.2
0.3
0.4
0.5
0.6
0.7
0.8
0.9
1
2
2.5
3
3.5
4
4.5
5
5.5
6
6.5
7
7.5
8

[FIG. 4]

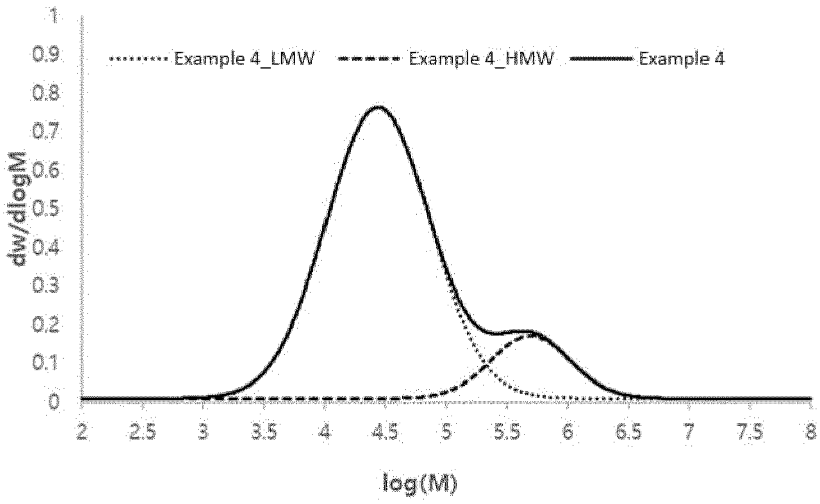
Example 4_LMW
Example 4_HMW
Example 4
dw/dlogM
log(M)
0
0.1
0.2
0.3
0.4
0.5
0.6
0.7
0.8
0.9
1
2
2.5
3
3.5
4
4.5
5
5.5
6
6.5
7
7.5
8

[FIG. 5]

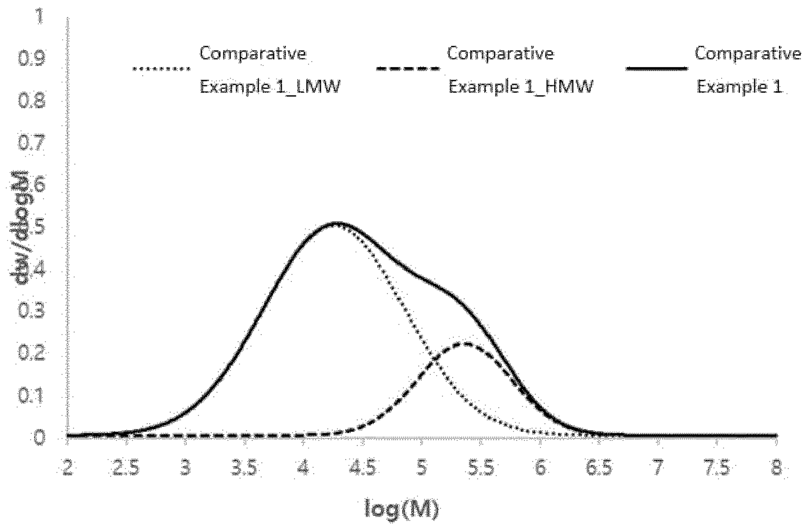
Comparative Example 1_LMW
Comparative Example 1_HMW
Comparative Example 1
dw/dlogM
log(M)
0
0.1
0.2
0.3
0.4
0.5
0.6
0.7
0.8
0.9
1
2
2.5
3
3.5
4
4.5
5
5.5
6
6.5
7
7.5
8

[FIG. 6]

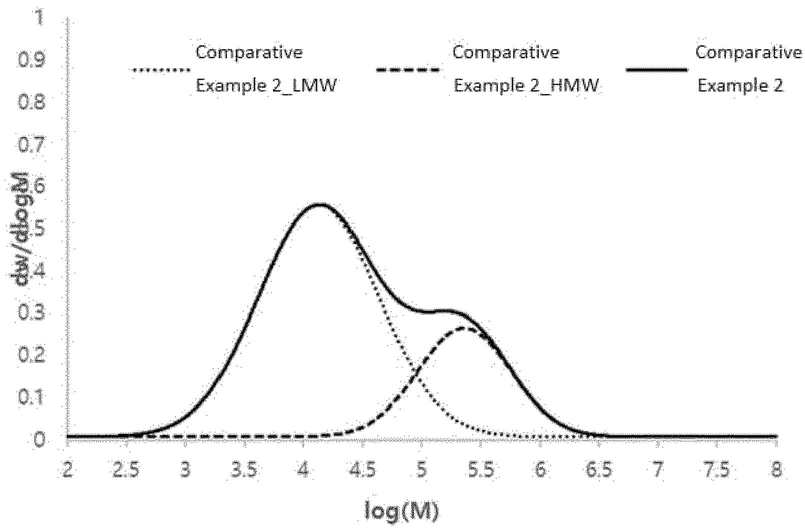
Comparative Example 2_LMW
Comparative Example 2_HMW
Comparative Example 2
dw/dlogM
log(M)
0
0.1
0.2
0.3
0.4
0.5
0.6
0.7
0.8
0.9
1
2
2.5
3
3.5
4
4.5
5
5.5
6
6.5
7
7.5
8

[FIG. 7]

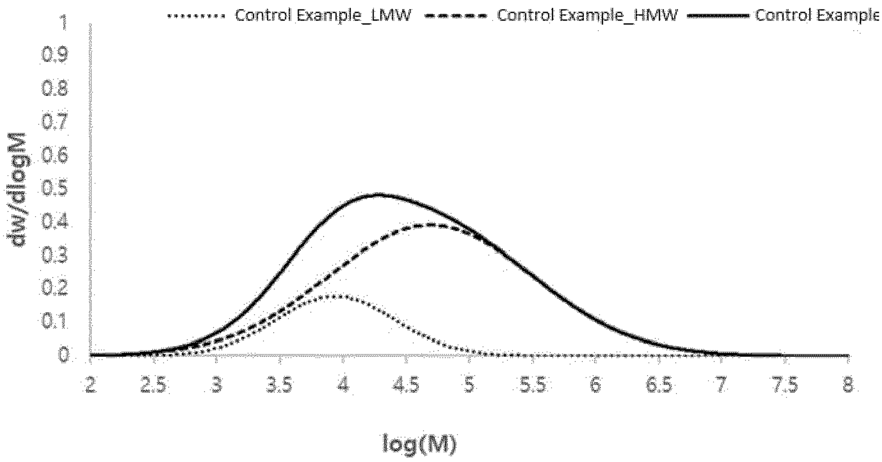
Control Example_LMW
Control Example_HMW
Control Example
dw/dlogM
log(M)
1
0.9
0.8
0.7
0.6
0.5
0.4
0.3
0.2
0.1
0
2
2.5
3
3.5
4
4.5
5
5.5
6
6.5
7
7.5
8

**INTERNATIONAL SEARCH REPORT**

International application No.
**PCT/KR2022/019675**

**A. CLASSIFICATION OF SUBJECT MATTER**

**C08F 210/16**(2006.01)i; **C08F 210/14**(2006.01)i; **C08F 4/659**(2006.01)i; **C08F 4/6592**(2006.01)i; **C08F 4/64**(2006.01)i

According to International Patent Classification (IPC) or to both national classification and IPC

**B. FIELDS SEARCHED**

Minimum documentation searched (classification system followed by classification symbols)

C08F 210/16(2006.01); C08F 10/00(2006.01); C08F 210/02(2006.01); C08F 210/14(2006.01); C08F 4/64(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 혼성 촉매(hybrid catalyst), 올레핀계 중합체(olefin-based polymer), 메탈로센(metallocene), 전이금속 화합물(transition metal compound), 조촉매(cocatalyst), 가공성 인덱스(processability index)

**C. DOCUMENTS CONSIDERED TO BE RELEVANT**

| Category* | Citation of document, with indication, where appropriate, of the relevant passages | Relevant to claim No. |
|---|---|---|
| X | WO 2012-033670 A1 (CHEVRON PHILLIPS CHEMICAL COMPANY LP) 15 March 2012 (2012-03-15) See paragraphs [0025], [0037], [0070]-[0078], [00123] and [00124]; and claims 1-32. | 1-17 |
| A | KR 10-2020-0037807 A (TOTAL RESEARCH & TECHNOLOGY FELUY) 09 April 2020 (2020-04-09) See claims 1-15. | 1-17 |
| A | KR 10-2020-0075963 A (HANWHA SOLUTIONS CORPORATION) 29 June 2020 (2020-06-29) See claims 1-23. | 1-17 |
| A | WO 2009-064404 A2 (UNIVATION TECHNOLOGIES, LLC) 22 May 2009 (2009-05-22) See claims 1-79. | 1-17 |
| A | KR 10-2021-0045201 A (HANWHA SOLUTIONS CORPORATION) 26 April 2021 (2021-04-26) See claims 1-20. | 1-17 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 March 2023** | **29 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
PCT/KR2022/019675

C. DOCUMENTS CONSIDERED TO BE RELEVANT

| Category* | Citation of document, with indication, where appropriate, of the relevant passages | Relevant to claim No. |
|---|---|---|
| A | WO 2010-132811 A1 (UNIVATION TECHNOLOGIES, LLC) 18 November 2010 (2010-11-18) See claims 1-14. | 1-17 |

Form PCT/ISA/210 (second sheet) (July 2022)

**INTERNATIONAL SEARCH REPORT**
**Information on patent family members**

International application No.
**PCT/KR2022/019675**

| Patent document cited in search report | Publication date (day/month/year) | Patent family member(s) | Publication date (day/month/year) |
|---|---|---|---|
| WO 2012-033670 A1 | 15 March 2012 | CN 103108894 A | 15 May 2013 |
| | | CN 103108894 B | 11 May 2016 |
| | | EP 2614095 A1 | 17 July 2013 |
| | | EP 2614095 B1 | 26 August 2015 |
| | | US 2012-0059134 A1 | 08 March 2012 |
| | | US 8932975 B2 | 13 January 2015 |
| KR 10-2020-0037807 A | 09 April 2020 | CA 3069266 A1 | 07 February 2019 |
| | | CA 3069270 A1 | 07 February 2019 |
| | | CN 111051366 A | 21 April 2020 |
| | | CN 111051367 A | 21 April 2020 |
| | | EP 3661982 A1 | 10 June 2020 |
| | | EP 3661982 B1 | 01 December 2021 |
| | | EP 3661983 A1 | 10 June 2020 |
| | | EP 3661983 B1 | 19 January 2022 |
| | | ES 2907873 T3 | 26 April 2022 |
| | | ES 2909025 T3 | 05 May 2022 |
| | | JP 2020-529495 A | 08 October 2020 |
| | | JP 2020-530050 A | 15 October 2020 |
| | | JP 7190091 B2 | 15 December 2022 |
| | | KR 10-2020-0037808 A | 09 April 2020 |
| | | PL 3661982 T3 | 04 April 2022 |
| | | PL 3661983 T3 | 30 May 2022 |
| | | US 11274171 B2 | 15 March 2022 |
| | | US 2021-0087311 A1 | 25 March 2021 |
| | | US 2021-0155724 A1 | 27 May 2021 |
| | | WO 2019-025528 A1 | 07 February 2019 |
| | | WO 2019-025530 A1 | 07 February 2019 |
| KR 10-2020-0075963 A | 29 June 2020 | CN 113227171 A | 06 August 2021 |
| | | EP 3885374 A1 | 29 September 2021 |
| | | JP 2022-515730 A | 22 February 2022 |
| | | KR 10-2272245 B1 | 02 July 2021 |
| | | US 2022-0064344 A1 | 03 March 2022 |
| | | WO 2020-130452 A1 | 25 June 2020 |
| WO 2009-064404 A2 | 22 May 2009 | BR PI0820309 A2 | 26 January 2021 |
| | | BR PI0820309 B1 | 08 September 2021 |
| | | BR PI0820630 A2 | 22 December 2020 |
| | | BR PI0820630 B1 | 20 July 2021 |
| | | CL 2008003394 A1 | 06 March 2009 |
| | | CN 101855252 A | 06 October 2010 |
| | | CN 101861339 A | 13 October 2010 |
| | | CN 101861339 B | 29 October 2014 |
| | | CN 102585058 A | 18 July 2012 |
| | | CN 102585058 B | 06 April 2016 |
| | | EP 2209819 A2 | 28 July 2010 |
| | | EP 2209820 A1 | 28 July 2010 |
| | | EP 3309182 A2 | 18 April 2018 |
| | | EP 3309182 A3 | 13 June 2018 |
| | | EP 3309182 B1 | 30 September 2020 |
| | | ES 2836248 T3 | 24 June 2021 |
| | | RU 2010123984 A | 20 December 2011 |

Form PCT/ISA/210 (patent family annex) (July 2022)

**INTERNATIONAL SEARCH REPORT**
**Information on patent family members**

International application No.
**PCT/KR2022/019675**

| Patent document cited in search report | Publication date (day/month/year) | Patent family member(s) | Publication date (day/month/year) |
|---|---|---|---|
| | | RU 2010123990 A | 20 December 2011 |
| | | RU 2509088 C2 | 10 March 2014 |
| | | TW 200936619 A | 01 September 2009 |
| | | US 2009-0306323 A1 | 10 December 2009 |
| | | US 2010-0234547 A1 | 16 September 2010 |
| | | US 2010-0261861 A1 | 14 October 2010 |
| | | US 2012-0271017 A1 | 25 October 2012 |
| | | US 8088704 B2 | 03 January 2012 |
| | | US 8455601 B2 | 04 June 2013 |
| | | US 8586497 B2 | 19 November 2013 |
| | | US 8835577 B2 | 16 September 2014 |
| | | WO 2009-064404 A3 | 20 August 2009 |
| | | WO 2009-064452 A2 | 22 May 2009 |
| | | WO 2009-064452 A3 | 02 July 2009 |
| | | WO 2009-064482 A1 | 22 May 2009 |
| | | WO 2011-087520 A1 | 21 July 2011 |
| KR 10-2021-0045201 A | 26 April 2021 | CN 114761448 A | 15 July 2022 |
| | | EP 4047025 A1 | 24 August 2022 |
| | | WO 2021-075788 A1 | 22 April 2021 |
| WO 2010-132811 A1 | 18 November 2010 | BR PI1010927 A2 | 05 April 2016 |
| | | CA 2757045 A1 | 18 November 2010 |
| | | CA 2757045 C | 07 March 2017 |
| | | CN 102414228 A | 11 April 2012 |
| | | CN 102414228 B | 07 May 2014 |
| | | EP 2430053 A1 | 21 March 2012 |
| | | RU 2542104 C2 | 20 February 2015 |
| | | US 2012-0046428 A1 | 23 February 2012 |
| | | US 8435914 B2 | 07 May 2013 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5272236 A
- US 4935474 A
- US 6828394 B
- US 6894128 B
- KR 1437509
- US 6841631 B